# EUROPÄISCHE PATENTSCHRIFT

(11) **EP 2 547 431 B1**
(45) Veröffentlichungstag und Bekanntmachung des Hinweises auf die Patenterteilung: **08.05.2019**
(21) Anmeldenummer: 11708856.7
(22) Anmeldetag: 16.03.2011
(51) Int. Cl.: B01F 11/00, B01L 9/00, B06B 1/12, B01F 15/00, B01L 7/00, G01N 35/02, G01N 35/00

(54) **POSITIONIEREINRICHTUNG FÜR EINE FUNKTIONSEINRICHTUNG**
POSITIONING UNIT FOR A FUNCTIONAL UNIT
DISPOSITIF DE POSITIONNEMENT POUR UN DISPOSITIF FONCTIONNEL

(30) Priorität: 18.03.2010 DE 102010011899
(43) Veröffentlichungstag der Anmeldung: 23.01.2013
(73) Patentinhaber: Quantifoil Instruments Gmbh, 07749 Jena (DE)
(72) Erfinder: HOYER, Olaf, 07778 Dornburg (DE); VESTER, Andreas, 07743 Jena (DE); HEINRICH, Patrick, DE Jena (DE)
(74) Vertreter: Huenges, Martin
(86) Internationale Anmeldenummer: PCT/EP2011/053956
(87) Internationale Veröffentlichungsnummer: WO 2011/113858

(56) Entgegenhaltungen:
- EP-A1- 1 186 891
- EP-A1- 2 408 563
- WO-A1-86/07232
- WO-A1-99/15905
- WO-A1-2007/103963
- WO-A1-2010/106147
- WO-A2-2004/003504
- WO-A2-2008/135565
- DE-A1- 10 134 702
- DE-A1-102004 021 664
- GB-A- 1 447 643
- US-A- 2 599 833
- US-A1- 2007 020 152

## Beschreibung

Diese Anmeldung beansprucht die Priorität der Deutschen Patentanmeldung DE 10 2010 011 899, eingereicht am 18. März 2010.

Die Erfindung betrifft eine Vorrichtung zum Positionieren einer Funktionseinrichtung.

Darüber hinaus betrifft die Erfindung ein Verfahren zum Positionieren einer Funktionseinrichtung.

Für die simultane Prozessierung einer großen Anzahl kleiner Probenvolumina hat sich in der Molekularbiologie die Mikrotiterplatte als Standard durchgesetzt. Dabei handelt es sich um eine rechteckige Platte fest gelegter Abmaße, die eine definierte Anzahl von isolierten Kavitäten (Wells) in Reihen und Spalten enthält. Innerhalb dieser Kavitäten können verschiedene Proben unabhängig voneinander auf ihre Eigenschaften geprüft werden. Üblicherweise finden in der pharmazeutischen, chemischen und biologischen Forschung Mikrotiterplatten mit 96, 384 oder 1536 Kavitäten eine breite Anwendung.

Mit zunehmendem Automatisierungsgrad und der Zunahme der Anzahl der Kavitäten einer Mikrotiterplatte besteht die Tendenz, Befüllungsvorgänge und weitere Prozesse zu automatisieren. Für die simultane Durchführung der Befüllung der Kavitäten sind verschiedene Arten von Pipettierköpfen bekannt, welche eine der Anzahl der Kavitäten entsprechende Anzahl von Pipettenspitzen aufnehmen können.

Je größer die Anzahl der Kavitäten der entsprechenden Mikrotiterplatte ist, desto kleiner wird der Durchmesser jeder dieser Vertiefungen. Damit steigen die Anforderungen an die Positioniergenauigkeit von Mikrotiterplatte zu Pipettierkopf. Weiterhin ist es in der pharmazeutischen, chemischen und biologischen Forschung bei einer großen Zahl von Anwendungen notwendig, eine gute Durchmischung der Komponenten in den Kavitäten der Mikrotiterplatte zu gewährleisten. Eine einfache Möglichkeit zur Beeinflussung der lokalen Konzentration und damit der Wechselwirkungswahrscheinlichkeit der Reaktionspartner ist ein externer Energieeintrag durch definiertes Bewegen (Schütteln) des Reaktionsbehälters. Vorteil eines solchen Verfahrens ist die Kontaminationsfreiheit aufgrund des berührungslosen Energieeintrags (im Gegensatz zu Verfahren mit bewegten Mischwerkzeugen). Weiterhin wird durch diese Mischbewegung einer Schüttelvorrichtung auch die Homogenisierung der Temperatur innerhalb der Probe gegenüber natürlich vorhandenen Ausgleichsvorgängen beschleunigt.

Fertigungstoleranzen bei der Herstellung von Mikrotiterplatten in Länge, Breite und Sockelhöhe wirken sich direkt auf die Positionierung der Mikrotiterplatte aus, da die Mikrotiterplatte herkömmlich oft durch Federn gegen feste Hindernisse verschoben wird.

Zu der Fixierung von Mikrotiterplatten während des Pipettier- oder Schüttelvorgangs sind bei herkömmlichen Systemen oft Positionierstücke fest angebracht, deren Aufgabe es ist, die Mikrotiterplatte stets in Position zu halten. In diesen Positionierstücken können Federn enthalten sein. Die erzeugte Federkraft sollte jedoch so groß sein, dass die Mikrotiterplatte entgegen der durch die orbitale Mischbewegung erzeugten Zentrifugalkraft in Position gehalten wird. Durch die hohe notwendige Kraft kann das Einsetzen der Mikrotiterplatten in die Schüttelvorrichtung durch die Transportvorrichtung (zum Beispiel Greifarm) eines Roboters unter Umständen schwierig oder unmöglich sein. Beim Schüttelvorgang kann es zu Bewegungen der Mikrotiterplatte und in der Folge zu unerwünschten Bewegungen einer Positioniervorrichtung kommen.

EP 1,186,891 offenbart, dass zur Ermöglichung der räumlichen Ausrichtung einer Trägerplatte diese an der Unterseite einen Gelenkskopf aufweist, der in einer Gelenkspfanne einer Auflageplatte liegt. Durch eine mittige Öffnung der Gelenkspfanne ist ein Stutzen des Gelenkskopfs geführt, der einen an der Außenseite der Gelenkspfanne anliegenden Klemmring trägt, welcher zwecks Fixierung der Ausrichtung der Trägerplatte mittels einer spannbaren Bride andrückbar ist. Zwei einander an der Oberseite der Trägerplatte gegenüberliegende gegengleich diagonal nach außen verschiebbare Zentrieranschläge sind an diagonal verschiebbaren Schiebern befestigt. Diese greifen an den entgegengesetzten Enden eines drehbaren Kupplungshebels mit demselben ein. Er sitzt an einer senkrechten Welle, welche von der Unterseite der Trägerplatte durch eine Bohrung im Gelenkskopf bis ans Ende des Stutzens reicht. Dort trägt sie einen Betätigungshebel, der zur Bewegung der Zentrieranschläge nach außen zwecks Ermöglichung des Absetzens oder Aufnehmens einer Mikrotiterplatte gegen die Rückstellkraft einer Spiralfeder drehbar ist.

WO 86/07232 offenbart eine Vorrichtung zum Positionieren eines Schaltkreispaneels.

EP 1,111,391 offenbart eine Vorrichtung zur Aufnahme eines Gegenstandes, insbesondere einer Mikrotiterplatte, mit einer Ablagefläche, wobei im Bereich der Ablagefläche ein eine Verschiebung des Gegenstandes in der Ebene derselben einseitig beschränkender Anschlag vorgesehen ist sowie eine Klemmvorrichtung mit einem Klemmteil, das gegen eine Vorspannung dem Anschlag gegenüber zurückziehbar ist.

DE 10 2004 021 664 offenbart eine Mikrotiterplattenschüttelvorrichtung mit einer Schwingplatte, die einen Aufnahmebereich für eine Mikrotiterplatte und darauf angeordnete Positionierstücke für die aufzunehmende Mikrotiterplatte aufweist. Mindestens ein Positionierstück ist bewegbar gelagert und zwischen einer Arbeitsposition und einer Freigabeposition bewegbar. Das mindestens eine beweglich gelagerte Positionierstück ist von der Arbeits- in die Freigabeposition mittels eines Antriebs bewegbar.

WO 99/13339 offenbart eine Positioniervorrichtung zum Positionieren einer Mikrotiterplatte. In einer umgebenden Plattform kann eine Positionierplattform vorgesehen sein. In der Positionierplattform kann eine weitere Plattform vorgesehen sein. Die umgebende Plattform weist Aktuatoren auf. Eine bewegliche Trägerplattform der Positionierplattform kann relativ zu der Trägerplattform bewegt werden. Dabei sind bulkartige Elemente entlang der Längsseite zwischen der innersten weiteren Plattform und der eingehäusten Positionierplattform angeordnet. Mittels eines Fluides, wie beispielsweise Druckluft, kann das bulkartige Elemente das Fluid aufnehmen bzw. das Fluid ausblasen, so dass dadurch eine Bewegung und Positionierung der inneren eingehäusten Plattform umgesetzt werden kann.

DE 4419480 offenbart eine Vorrichtung zum Haltern von Aufsätzen auf Schüttlergeräten, die einen bewegbaren Schütteltisch mit einer ebenen Aufstellfläche für die Aufsätze aufweisen, gekennzeichnet durch die Anordnung eines ebenen Formteils aus einem flexiblen Werkstoff mit großem Reibungskoeffizienten, insbesondere Äthylen-Propylen-Kautschuk, das frei auf der Aufstellfläche des Schütteltisches aufgelegt und durch Reibungskraft fixiert ist und auf der den Schütteltisch abgewandten Seitenfläche aufgebrachte Aufsätze vermittels Reibungskraft fixiert.

EP 1,721,964 offenbart eine Lagervorrichtung für Laborproben mit einem Schüttelantrieb, einem vom Schüttelantrieb zu einer Schüttelbewegung mit horizontaler Komponente angetriebenen Schachtträger und mindestens einen auf dem Schachtträger angeordneten Lagerschacht, welcher Lagerplätze für eine Mehrzahl von Laborproben übereinander aufweist, gekennzeichnet durch eine Gegengewicht-Anordnung, die mit einem oberen Endbereich des Lagerschachts verbunden ist und angetrieben ist, um auf den oberen Endbereich eine zur Schüttelbewegung gegenläufige Kraft auszuüben um so einem durch die Schüttelbewegung erzeugten Schwingen des oberen Endbereichs des Lagerschachts entgegenzuwirken.

EP 1,393,797 offenbart ein Schüttel- und Mischgerät mit einem elektrischen Antrieb, einer von dem Antrieb angetriebenen Exzentereinheit und einer von der Exzentereinheit bewegten Gefäßhalterung, die zur Aufnahme der von dem Schüttel- und Mischgerät zu bewegenden Gefäße ausgebildet ist, dadurch gekennzeichnet, dass sich der gemeinsame Schwerpunkt von Gefäßhalterung und Gefäßen in einer parallel zur Exzenterbewegung orientierten Ebene befindet, die nur einen geringen Höhenabstand zu der parallel zur Exzenterbewegung orientierten Ebene aufweist, in der der Schwerpunkt der Exzentereinheit liegt.

DE 10 2004 021 664 offenbart eine Mikrotiterplattenschüttelvorrichtung mit einer Schwingplatte, die einen Aufnahmebereich für eine Mikrotiterplatte und darauf angeordnete Positionierstücke für die aufzunehmende Mikrotiterplatte aufweist, dadurch gekennzeichnet, dass mindestens ein Positionierstück bewegbar gelagert und zwischen einer Arbeitsposition und einer Freigabeposition bewegbar ist, und dass das mindestens eine beweglich gelagerte Positionierstück von der Arbeits- in die Freigabeposition mittels eines Antriebsbewegbar ist.

DE 10 2004 043 883 offenbart eine Probenflasche, insbesondere Milchprobenflasche, mit einem Flaschenkörper, in dem ein Aufnahmeraum zur Aufnahme einer Probe ausgebildet ist, einem am Flaschenkörper angeordneten ersten Deckel zum Abschließen des Aufhahmeraums, wobei im ersten Deckel eine erste Durchgangsöffhung in den Aufhahmeraum ausgebildet ist, einem zweiten Deckel mit einer zweiten Durchgangsöffnung, wobei wenigstens ein Teil des zweiten Deckels derart in einer Betriebsbewegungsrichtung bewegbar mit dem ersten Deckel in Wirkverbindung steht, dass durch diese Bewegung die beiden Durchgangsöffnungen zumindest teilweise in Deckung bringbar und/oder aus der zumindest teilweisen Deckung bringbar sind, und einer Sperreinrichtung, die eine der Betriebsbewegungsrichtung entgegengerichtete Bewegung des zweiten Deckels sperrt. Es ist immer noch schwierig, eine Funktionseinrichtung präzise zu positionieren und bei mechanischer Beanspruchung, insbesondere bei einem Schüttelbetrieb, eine Positioniereinrichtung vor unerwünschten Einflüssen zu bewahren.

WO 99/15905 A1 offenbart ein System zur Handhabung einer Multiwell-Platte. Die Multiwell-Platte wird mittels eines Greifmechanismus zwischen Vorsprüngen und einem schwenkbar gelagerten Greifhebel fixiert. Der Greifhebel ist um eine Achse schwenkbar. Der Greifhebel wird mittels eines Aktuators derart gesteuert, dass der Greifhebel um die Achse gezielt gesteuert wird, um die Multiwell-Platte gegen die Vorsprünge zu drücken bzw. freizugeben. Zwischen dem Aktuator und dem Greifhebel findet eine direkte symmetrische Kraftübertragung statt.

US 2,599,833 A offenbart eine Sicherungshalterung für Klemmen einer Mixmaschine für Farben. Zwischen zwei Klemmplatten wird eine Dose eingeklemmt. Von einem Schüttlerkopf der Mixmaschine verläuft ein Arm zu einer Gewindestange, welche die Klemmplatten verbindet. Entlang einer Oberfläche einer Klemmplatte verlaufen schwenkbare Verstärkungsrippen, um die Klemmplatte zu verstärken, wenn eine Klemmkraft ausgeübt wird. Ein weiterer Arm verläuft von der Gewindestange zu der Verstärkungsrippe und fixiert diese Verstärkungsrippe vor einem ungewollten Verschwenken. Zwischen der Verstärkungsrippe und dem weiteren Arm findet eine direkte symmetrische Kraftübertragung statt.

WO 2007/103963 A1 offenbart einen automatischen Klemmmechanismus für Flüssigkeitsmixer. Zwischen einer unteren Basisplatte und einer oberen Plattenanordnung wird ein Flüssigkeitsbehälter eingespannt. Die obere Plattenanordnung ist mittels einer Gewindestange mit der unteren Basisplatte beabstandet gehalten. Ein Motor rotiert die Gewindestange, sodass sich der Abstand zwischen der Gewindestange und der unteren Basisplatte ändert. Mittels der Gewindestange findet eine symmetrische Kraftübertragung statt.

GB 1 447 643 A offenbart eine Rahmenklemme, um Bilderrahmen einfacher herzustellen. Die Rahmenklemme weist vier Eckbereiche auf, an welchen jeweils Teile eines Bilderrahmens gehaltert werden können. Von jedem der vier Eckbereiche laufen entlang der Diagonalen vier Arme. Die vier Arme treffen sich in der Mitte der Rahmenklemme und werden an einer Trageplatte verschiebbar befestigt. Über einen Hebel können die Arme relativ zueinander verschoben werden. Zwischen den vier Armen und dem Hebel findet eine symmetrische Kraftübertragung statt.

DE 101 34 702 A1 offenbart eine Positionierhilfe für Liquidhandlingseinrichtungen mit einer horizontal verfahrbaren Aufhahmeeinrichtung für Adapter und Mikrotitrationsplatte. Die Aufnahmeeinrichtung weist einen in einem geschlossenen Kanal verlaufenden elastischen Schlauch auf, wobei der Schlauch mit Druckluft beaufschlagbar ist.

WO 2008/ 135565 A1 offenbart eine Probenträgervorrichtung mit einer Antriebswelle, welche mit einer Antriebseinrichtung antreibbar ist. An der Antriebswelle ist ein Ausgleichsgewicht angeordnet, um die Probenträgervorrichtung auszugleichen.

WO 2004/003504 A2 offenbart eine Plattenträgervorrichtung mit ersten und zweiten Positionierleisten, zwischen welchen die zu tragende Platte befestigt werden kann.

US 2007/020152 A1 offenbart einen Positionsmechanismus für eine Mikrotiterplatte. Ein Grundkörper weist hierbei eine Aussparung auf, um die Mikrotiterplatte aufzunehmen.

Es ist eine Aufgabe der vorliegenden Erfindung, eine Funktionseinrichtung präzise zu positionieren und bei mechanischer Beanspruchung eine Positioniereinrichtung vor unerwünschten Einflüssen zu schützen.

Diese Aufgabe wird durch eine Vorrichtung zum Positionieren einer Funktionseinrichtung (zum Beispiel einer Trägerplatte, insbesondere einer Probenträgerplatte, weiter insbesondere einer rechteckigen Probenträgerplatte) und durch ein Verfahren zum Positionieren einer Funktionseinrichtung mit den Merkmalen gemäß den unabhängigen Patentansprüchen gelöst.

Unter einer "Funktionseinrichtung" kann insbesondere jede beliebige körperliche Einrichtung verstanden werden, die zum Bereitstellen einer zugeordneten Funktion in der Positioniereinrichtung ortsdefiniert positioniert werden kann. Insbesondere kann die Funktionseinrichtung eine Trägerplatte, zum Beispiel eine Probenträgerplatte wie etwa eine Mikrotiterplatte sein. Alternativ kann die Funktionseinrichtung zum Beispiel ein rasterartig angeordnetes Vorrats- oder Aufnahmebehältnis sein, das zum Beispiel mit Einmalpipettierspitzen oder -nadeln oder ähnlichen Hilfsmitteln bestückt sein kann.

Unter einem "Trägerelement" an dem Grundkörper kann insbesondere eine Komponente der Vorrichtung verstanden werden, die sich mit einer eingespannten Funktionseinrichtung mitbewegt. Dagegen kann der Grundkörper in einem Laborsystem ruhen. Der Grundkörper kann auf eine Unterlage (zum Beispiel eine Tischplatte) aufgesetzt werden und auf dieser ruhend verbleiben.

Unter einer "Funktionseinrichtungskraft" kann insbesondere eine Kraft verstanden werden, die eine Funktionseinrichtung im zwischen Positionieranschlägen eingespannten Zustand auf die Positionieranschläge ausübt. Eine solche Kraft kann insbesondere durch eine durch eine Schüttelbewegung erzeugte Beschleunigungskraft entstehen, mit der die Funktionseinrichtung zum Mischen von darin aufgenommenen fluidischen Proben beaufschlagt werden kann. Insbesondere können die Betätigungseinrichtung und das Kraftübertragungselement derart gekoppelt sein, dass in dem die Funktionseinrichtung in Eingriff nehmenden Betriebszustand das Kraftübertragungselement eine Funktionseinrichtungskraft von bis zu 50 N auf die Betätigungseinrichtung überträgt, ohne dass die Betätigungseinrichtung in Bewegung versetzt wird.

Unter einer "Betätigungskraft" kann insbesondere eine Muskelkraft eines Benutzers oder eine Kraft einer elektrischen Steuereinheit verstanden werden, die auf die Betätigungseinrichtung ausgeübt wird, um die Betätigungseinrichtung zwischen dem die Funktionseinrichtung freigebenden Betriebszustand und dem die Funktionseinrichtung in Eingriff nehmenden Betriebszustand zu überführen. Eine solche Betätigungskraft kann durch einen Benutzer oder eine elektrische Steuereinheit aktiv aufgebracht werden oder kann passiv dadurch erzeugt werden, dass eine zuvor ausgelenkte Feder durch Loslassen der Betätigungseinrichtung in ihre Ausgangslage, wobei die Feder optional vorgespannt sein kann, zurückkehrt. Anders ausgedrückt kann eine solche Betätigungskraft aktiv oder passiv ausgeübt werden. Zum Überführen der Positionieranschläge zwischen den beiden genannten Betriebszuständen kann das Aufbringen einer Betätigungskraft von höchstens 10 N ausreichend sein.

Gemäß einem exemplarischen Ausführungsbeispiel ist eine Positioniervorrichtung für eine Funktionseinrichtung geschaffen, bei der ein Ein- oder Ausspannen einer Funktionseinrichtung auf einem Trägerelement bzw. daran angeordneten Positionieranschlägen durch eine kraftarm betätigbare Betätigungseinrichtung ermöglicht ist. Durch eine einfache Verschiebeoperation können durch einen Kraftübertragungsmechanismus die Positionieranschläge voneinander entfernt werden, so dass ein Aufhahmeraum vergrößert und eine Funktionseinrichtung eingeführt werden kann. Nach Einführen kann durch ein Zurückschieben der Betätigungseinrichtung ein Rückführen der Positionieranschläge in eine andere Beabstandung erreicht werden, womit ein Ineingriffhehmen der Funktionseinrichtung durch die Positionieranschläge erfolgt. Wirkt auf die aufgenommene Funktionseinrichtung eine externe oder interne Kraft ein, zum Beispiel generiert von einer in den Grundkörper integrierten Schütteleinrichtung oder dergleichen, so ist erfindungsgemäß ein unerwünschtes Hin- und Herbewegen der Betätigungseinrichtung dadurch vermieden, dass in dem in Eingriff nehmenden Betriebszustand eine solche mechanische Funktionseinrichtungskraft auf die Betätigungseinrichtung so eingekoppelt wird, dass dies nicht zu einer Bewegung der Betätigungseinrichtung führt. Dies kann durch eine asymmetrische Kraftübertragungscharakteristik von der Betätigungseinrichtung auf die Positionieranschläge einerseits und von den Positionieranschlägen auf die Betätigungseinrichtung andererseits realisiert werden. Anders ausgedrückt bewirkt das Ausüben einer Kraft auf die Betätigungseinrichtung eine Auslenkung der Positionieranschläge, die größer ist als eine Auslenkung der Betätigungseinrichtung bei Ausüben dergleichen Kraft auf die Positionieranschläge. Mit bei Schüttelprozessen üblicherweise auftretenden Funktionseinrichtungskräften kann eine resultierende Sperre der Bewegbarkeit der Betätigungseinrichtung durch die Funktionseinrichtungskräfte nicht überwunden werden. Das Unterbinden einer Bewegung der Betätigungseinrichtung aufgrund einer von der Funktionseinrichtung ausgehenden Kraft erlaubt einen betriebssichereren Betrieb der Vorrichtung, da ein Hin- und Herbewegen der Betätigungseinrichtung dadurch vermieden werden kann. Dies stellt sicher, dass nicht durch eine unerwünschte Bewegung der Betätigungseinrichtung die Funktionseinrichtung aus den Positionieranschlägen herausfallen kann. Ferner ist durch das Inhibieren einer Bewegungsübertragung von den Positionieranschlägen auf die Betätigungseinrichtung eine konstant hohe Positioniergenauigkeit erreichbar. Bei üblichen Funktionseinrichtungskräften der Funktionseinrichtung, die durch ein Schütteln mit einer Frequenz von zum Beispiel 1000 Umdrehungen pro Minute hervorgerufen werden, führt eine resultierende Kraft dazu, dass die Betätigungseinrichtung in Ruhe verbleibt. Dies vermeidet es zuverlässig, dass durch eine unerwünschte Bewegung der Betätigungseinrichtung aufgrund des Schüttelns sich die Betätigungseinrichtung zumindest teilweise öffnet, womit die Funktionseinrichtung außer Eingriff mit den Positionierelementen geraten würde. In einem solchen unerwünschten Fall könnte also die Funktionseinrichtung bei hohen Geschwindigkeiten die Vorrichtung verlassen oder sich in dieser zumindest unkontrolliert bewegen. Genau dies wird durch die erfindungsgemäße Kraftübertragung zuverlässig vermieden. Dies erhöht die Betriebssicherheit der Vorrichtung und die Präzession der Einspannung der Funktionseinrichtung in der Vorrichtung. Gerade bei Einsatz einer automatischen Pipettiereinrichtung mit einer zum Beispiel matrixartigen Anordnung von Keramiknadeln ist eine hohe Positioniergenauigkeit vor, während und nach einer Schüttelprozedur wichtig.

Eine solche asymmetrische Kraftübertragungscharakteristik (von der Betätigungseinrichtung auf die Funktionseinrichtung oder umgekehrt) kann durch verschiedene mechanische Konstruktionen erreicht werden. Gemäß einem Ausführungsbeispiel erfolgt dies durch eine Einkopplung einer Kraft von der Funktionseinrichtung auf die Betätigungseinrichtung in einer solchen Wirkrichtung, die mit einer Verschieberichtung der Betätigungseinrichtung inkompatibel ist, insbesondere senkrecht dazu orientiert ist. Gemäß einer alternativen Ausgestaltung könnte eine nur unidirektionale Kraftübertragung durch eine Einwegkupplung (bekannt aus dem Bereich der Fahrradtechnik zum Erreichen eines Freilaufs) realisiert werden.

Im Weiteren werden zusätzliche Ausführungsbeispiele der Vorrichtung beschrieben. Diese gelten auch für das Verfahren.

In einem exemplarischen Ausführungsbeispiel weist die Vorrichtung eine bewegbar gelagerte Koppelstange auf, mittels welcher die Betätigungseinrichtung mit dem Kraftübertragungselement gekoppelt ist. Das Überführen der Positionieranschläge zwischen dem die Funktionseinrichtung in Eingriff nehmenden Betriebszustand und dem die Funktionseinrichtung freigebenden Betriebszustand ist mittels Bewegens der Koppelstange bewerkstelligbar. Die Koppelstange kann also zwischen einer ersten Stellung und einer zweiten Stellung derart bewegt (insbesondere geschwenkt) werden, dass eine Kraftübertragung von der Betätigungseinrichtung auf die Positionieranschläge ermöglicht ist. Andererseits kann zumindest in einer der Stellungen die Kraftübertragung nicht so erfolgen, dass eine Bewegung der Positionieranschläge zu einer Bewegung der Betätigungseinrichtung führt. Zum Beispiel kann zu diesem Zweck eine Koppelstange transversal verschoben werden. Insbesondere ist dabei eine Konfiguration möglich, bei der die Koppelstange zwischen den beiden Positionen geschwenkt wird, da durch ein Schwenken eine effiziente Anpassung eines wirkenden Kraftarms möglich ist.

Ferner kann die Vorrichtung eine Linearführungseinrichtung zum Vorgeben einer Linearverschieberichtung aufweisen. Als Linearverschieberichtung kann diejenige Richtung bezeichnet werden, entlang welcher die Betätigungseinrichtung ausschließlich verschiebbar ist. Mit anderen Worten kann eine solche Linearverschiebeeinrichtung definieren, entlang welcher Richtung die Betätigungseinrichtung betätigt werden kann, wobei bei Betätigen in einer dazu senkrechten Richtung nicht möglich ist. In dem die Funktionseinrichtung in Eingriff nehmenden Betriebszustand (der ohne Einwirken äußerer Kräfte vorherrschen kann) kann die Koppelstange derart orientiert sein, dass die Funktionseinrichtungskraft im Wesentlichen senkrecht zur Linearverschieberichtung wirkend auf die Betätigungseinrichtung übertragbar ist. Wird die Funktionseinrichtungskraft, das heißt eine von dem Probenträger ausgehende oder bewirkte Kraft, so auf die Betätigungseinrichtung übertragen, dass die Kraft (annähernd) senkrecht zu der Linearverschieberichtung einwirkt, so ist (annähernd) keine Kraftkomponente übertragen, die zu einer Bewegung der Betätigungsvorrichtung führen würde. Dies liegt darin, dass die Betätigungseinrichtung in der Linearverschiebeeinrichtung so gelagert sein kann, dass eine Verschiebung nur in Linearverschieberichtung möglich ist, nicht aber in anderen Richtungen.

Die Einrichtung kann bewegbar gelagerte weitere Koppelstangen aufweisen, mittels welcher die Positionieranschläge mit dem Kraftübertragungselement gekoppelt sein können. Das Überführen der Positionieranschläge zwischen dem die Funktionseinrichtung in Eingriff nehmenden Betriebszustand und dem die Funktionseinrichtung freigebenden Betriebszustand kann mittels Bewegens, insbesondere mittels Schwenkens, der weiteren Koppelstangen bewerkstelligt werden. Ferner kann die Einrichtung weitere Linearführungseinrichtungen zum Vorgeben von weiteren Linearverschieberichtungen der Positionieranschläge aufweisen, entlang welchen weiteren Linearverschieberichtungen die Positionieranschläge ausschließlich verschiebbar sind. Eine Erstreckung der weiteren Koppelstangen kann mit den weiteren Linearverschieberichtungen fluchten. Die weiteren Koppelstangen können derart orientiert sein, dass die Betätigungskraft im Wesentlichen parallel zu den weiteren Linearverschieberichtungen wirkend auf die Positionieranschläge übertragen wird. Das im Wesentlichen parallel zu den weiteren Linearverschieberichtungen vorgenommene Einkoppeln einer (positiven oder negativen) Betätigungskraft stellt in der Wirkrichtung von der Betätigungseinrichtung zu den Positionieranschlägen eine kraftarme wirksame Krafteinkopplung sicher. Dagegen ist in umgekehrter Wirkrichtung von den Positionieranschlägen zu der Betätigungseinrichtung die Krafteinleitung möglichst bewegungsinhibierend, das heißt idealerweise senkrecht zu der Linearverschiebungsrichtung der Betätigungseinrichtung orientiert. Diese asymmetrische Kraftkopplung stellt die gewünschte Fixierung der Funktionseinrichtung selbst während eines Rüttelprozesses sicher.

Jedem der Positionieranschläge kann somit ein weiteres Linearführungselement zugeordnet sein, in oder an dem der jeweilige Positionieranschlag linear verschiebbar gelagert sein kann. Ein solches Linearführungselement kann ein Langloch aufweisen, entlang welchem ein Stift gleiten kann, um ein Verschieben des jeweiligen Positionieranschlags in Richtung des zentral angeordneten Kraftüberträgerelements oder von dem Kraftüberträgerelement weg zu ermöglichen. Bewegt sich ein Positionieranschlag in Richtung des Zentrums oder eines anderen definierten Zielpunkts, so bewegt sich auch der andere Positionieranschlag aufgrund der Kraftkopplung in Richtung des Zentrums. Umgekehrt entfernt sich ein Positionieranschlag von diesem Zentrum, wenn sich der andere Positionieranschlag von diesem Zentrum entfernt.

Diese weiteren Linearführungselemente können so orientiert sein, dass die Positionieranschläge parallel zueinander verschiebbar gelagert sind. Dies kann zum Beispiel dadurch erreicht werden, dass die Linearführungsnuten der weiteren Linearführungselemente zueinander im Wesentlichen parallel verlaufend orientiert sind, so dass bei ihrer Bewegung die Positionieranschläge zueinander parallel verschoben werden.

Die den Positionieranschlägen zugeordneten weiteren Linearführungselemente können insbesondere so orientiert sein, dass die Positionieranschläge gleich oder parallel versetzt zu einer Diagonalen des Trägerelements verschiebbar gelagert sind. Anders ausgedrückt bewegen sich gemäß diesem Ausführungsbeispiel die Positionieranschläge in den Linearführungselementen parallel zueinander, aber optional mit einem vorgegebenen lateralen Versatz. Dann bewegen sich die Positionieranschläge nicht exakt in Richtung eines Mittelpunkts des Trägerelements, sondern verfehlen bei einer fortgesetzten Bewegung den Mittelpunkt um einen vorgegebenen seitlichen Versatz, zum Beispiel in tangentialer Richtung. Dadurch kann eine Hebelkraft effizient zwischen dem Kraftübertragungselement und den Positionieranschlägen übertragen werden, was zu einer Drehung des Kraftübertragungselements und somit zu einer effizienten Kraftübertragung führen kann. Ein tangentialer Versatz ist nicht zwingend, da die Bewegung linear sein kann. In einem Ausführungsbeispiel bewegen sich die Linearverschiebeelemente nur linear in Verschieberichtung. Wenn die Diagonalen durch den Mittelpunkt gehen würden, dann ist vorteilhaft, dass die Anlenkpunkte der Koppelstangen an der Kupplungsscheibe außerhalb der Diagonalen liegen, um einen Hebelarm und damit ein Drehmoment zu erzeugen. Das Vorsehen eines Versatzes ist allgemein nicht zwingend und gilt zum Beispiel für rechteckige Probenplatten. Zum Beispiel bei einer quadratischen Probenplatte bewegen sie sich auf der Diagonalen durch den Mittelpunkt, das heißt ohne Versatz.

Die Betätigungseinrichtung kann einen Schieber zum manuellen Betätigen der Betätigungseinrichtung durch einen Benutzer aufweisen. Ein solcher Schieber kann ebenfalls in einer Linearführungsnut der Linearführungseinrichtung geführt werden, das heißt zum Beispiel mittels eines verschiebbaren Stiftes realisiert sein, der in einer langgestreckten Nut in einer vorgebbaren Richtung verschoben werden kann. Ein Benutzer ist somit vor einer fehlerhaften Bedienung der Vorrichtung geschützt, da eine solche Betätigungseinrichtung lediglich eine Vorwärts- oder Rückwärtsbewegung zum Überführen des Systems zwischen den beiden Betriebszuständen ermöglicht.

Der Schieber kann ein Griffstück aufweisen, welches geformt sein kann, um einem Benutzer intuitiv anzuzeigen, dass es sich hierbei um ein Griffstück handelt. Zum Beispiel kann ein solches Griffstück einen stiftartigen Endabschnitt aufweisen, an dem ein Benutzer die Betätigungsrichtung greifen kann. Mit einem solchen stiftartigen Endabschnitt ist sowohl ein Schieben als auch ein Ziehen möglich.

Zum Beispiel kann die Koppelstange bzw. jede der weiteren Koppelstangen einen ersten geradlinig verlaufenden Abschnitt und einen zweiten geradlinig verlaufenden Abschnitt aufweisen, wobei der erste geradlinig verlaufende Abschnitt und der zweite geradlinig verlaufende Abschnitt zueinander abgewinkelt sein können. Der erste geradlinig verlaufende Abschnitt kann unmittelbar in den zweiten geradlinig verlaufenden Abschnitt übergehen. In einem Grenzbereich ist eine Abrundung möglich. Ein solcher abgewinkelter Hebelarm erlaubt eine besonders Platz sparende und effektive Übertragung der Kräfte bzw. Überführung der Kopplungsstange zwischen den unterschiedlichen Betriebszuständen der Vorrichtung.

Die der Betätigungseinrichtung zugeordnete Linearverschieberichtung kann parallel zu einer seitlichen Begrenzungskante des Trägerelements verlaufen. Eine solche geometrische Anordnung erlaubt eine besonders benutzerfreundliche Betätigung, da auch im eingesetzten Zustand der Funktionseinrichtungen die Betätigungseinrichtung gut zugänglich bleibt. Außerdem ist ein randseitiger Verlauf der Linearverschieberichtung gut mit der gewünschten asymmetrischen Krafteinkopplung verträglich.

Korrespondierend kann die Betätigungseinrichtung an einem Seitenbereich des Trägerelements zwischen zwei benachbarten Eckbereichen des Trägerelements angeordnet sein. In einer solchen Konfiguration kann ein Bereich zwischen den Ecken des Trägerelements verwendet werden, um die Betätigungseinrichtung dort Platz sparend zu implementieren, ohne dass der zur Aufnahme der Funktionseinrichtung nutzbare Flächenbereich signifikant verringert wird. Ein eindimensionales Gleiten der Betätigungseinrichtung entlang eines solchen Seitenbereichs erlaubt es ebenfalls mit geringem konstruktivem Aufwand, die unidirektionale Kraftübertragung, wie oben beschrieben, zu ermöglichen.

Alternativ ist es allerdings auch möglich, die Betätigungseinrichtung in einem Eckbereich des Trägerelements anzuordnen und somit die Linearverschieberichtung im Wesentlichen von einem solchen Eckbereich in Richtung eines Zentrums des Trägerelements anzuordnen. Noch andere Geometrien, wie zum Beispiel das Anordnen der Betätigungseinrichtung an einer Unterseite der Vorrichtung oder in einem Mittelbereich des Grundträgers sind ebenfalls möglich.

Die Vorrichtung kann eine zwischen dem Trägerelement und der Betätigungseinrichtung angeordnete Spanneinrichtung aufweisen, die zum Übertragen einer mechanischen Kraft auf die Betätigungseinrichtung eingerichtet ist. Eine solche Spanneinrichtung kann insbesondere direkt einen Bereich zwischen dem Trägerelement und der Betätigungseinrichtung überbrücken. Die Spanneinrichtung, die zum Beispiel eine oder mehrere Federn, insbesondere eine Schraubenfeder, aufweisen kann, kann die Betätigungseinrichtung zum Beispiel in einer Stellung vorspannen (ausgelenkte Lage) die dem freigebenden Betriebszustand der Vorrichtung entspricht. Die Spanneinrichtung kann also die Tendenz haben, die Betätigungseinrichtung in den in Eingriff nehmenden Betriebszustand zurückzutreiben. Somit stellt die Spanneinrichtung einen Schutz gegen ein unerwünschtes Herausfallen einer eingespannten Funktionseinrichtung aus der Vorrichtung dar. Wenn ein Benutzer also keine Kraft auf die Betätigungseinrichtung ausübt, nehmen die Positionieranschläge eine aufgenommene Funktionseinrichtung in Eingriff und die Spanneinrichtung kann in einem kraftfreien Zustand sein. Erst bei Auslenkung der Betätigungseinrichtung entgegen einer rücktreibenden Spannkraft der Spannvorrichtung durch eine Muskelkraft eines Benutzers oder eine Betätigungskraft eines Roboters wird die Betätigungseinrichtung verschoben, was aufgrund des oben beschriebenen Kraftübermittlungsmechanismus dann zu einer Überführung der Positionieranschläge in den die Funktionseinrichtung freigebenden Zustand führt. Damit nach Einführen der Funktionseinrichtung diese sicher von den Positionieranschlägen gehalten bleibt, zieht die Spanneinrichtung die Funktionseinrichtung bei Entfernen der Muskelkraft oder der Betätigungskraft des Roboters wieder in den in Eingriff nehmenden Betriebszustand zurück.

Insbesondere kann ein Ende der Spanneinrichtung, das heißt ein Federende, in einem Eckbereich des Trägerelements angeordnet sein. Ein anderes Ende der Spanneinrichtung kann dann unmittelbar mit einem Schieber der Betätigungseinrichtung verbunden sein.

Die Spanneinrichtung kann insbesondere eine Mehrzahl (zum Beispiel zwei) von parallel zueinander angeordneten Federn aufweisen. Dies erhöht weiter die Stabilität bzw. die Zuverlässigkeit der Tendenz des Rücktreibens in den in Eingriff nehmenden Zustand der Vorrichtung im kraftfreien Fall.

Gemäß einem exemplarischen Ausführungsbeispiel der Erfindung können die Betätigungseinrichtung und das Kraftübertragungselement derart gekoppelt sein, dass in dem die Funktionseinrichtung in Eingriff nehmenden Betriebszustand das Kraftübertragungselement eine von einer Schütteleinrichtung bewirkte Beschleunigungskraft derart auf die Betätigungseinrichtung überträgt, dass die Betätigungseinrichtung trotz Einwirkens der übertragenen Beschleunigungskraft im Wesentlichen in einer Ruhestellung verbleibt. Mit anderen Worten kann es gemäß einem solchen Ausführungsbeispiel ermöglicht sein, dass die Betätigungseinrichtung zwar zum Einspannen oder Ausspannen der Funktionseinrichtung bezüglich Positionieranschlägen betätigt werden kann, so dass in dieser Wirkrichtung dann eine entsprechende Kraft von der Betätigungseinrichtung effizient auf die Positionieranschläge übertragen werden kann, um die Positionieranschläge zu verschieben. Simultan kann aber nach dem Einspannen der Positionieranschläge eine derartige Koppelstellung der Betätigungseinrichtung relativ zu dem Kraftübertragungselement herbeigeführt werden, dass eine zu einer Bewegung der Betätigungseinrichtung führende Krafteinleitung in umgekehrter Wirkrichtung, das heißt auf die Betätigungseinrichtung einwirkend, mechanisch gesperrt ist. Dies kann dadurch bewerkstelligt werden, dass eine Beschleunigungskraft mit einer solchen Richtung auf die Betätigungseinrichtung umgelenkt wird, dass diese orthogonal zu einer zum Beispiel linearen Verschieberichtung der Betätigungseinrichtung orientiert ist. Unter einer "Verschieberichtung" kann in diesem Zusammenhang eine Achse verstanden werden, entlang welcher die Betätigungseinrichtung durch einen Benutzer oder einen Roboter verschoben werden kann, wohingegen eine Verschiebung entlang anderer Achsen, insbesondere entlang einer zu der Verschieberichtung senkrechten Achse, unterbunden ist.

Insbesondere können die Betätigungseinrichtung und das Kraftübertragungselement (insbesondere in einer Ausbildung als Kupplungsscheibe) derart mittels der sie überbrückend verbindenden Koppelstange gekoppelt sein, dass in dem die Funktionseinrichtung in Eingriff nehmenden Betriebszustand diese Koppelstange die Schüttelkraft im Wesentlichen senkrecht zu einer Verschieberichtung der Betätigungseinrichtung einkoppelt. Die Koppelstange kann in unterschiedliche Orientierungen zu der Verschieberichtung der Betätigungseinrichtung gebracht werden. Bei einer winkeligen oder schrägen Stellung zwischen der Koppelstange und der Verschieberichtung kann zumindest eine von Null verschiedene Kraftkomponente in der Verschieberichtung wirken, so dass eine Kraftübertragung möglich ist. Bei einer orthogonalen oder zumindest im Wesentlichen orthogonalen (das heißt wenige Grad von einem rechten Winkel abweichenden) Stellung zwischen der Koppelstange und der Verschieberichtung kann keine (oder zumindest keine eine Haftreibung überwindende) Kraftkomponente in der Verschieberichtung wirken, so dass eine Bewegung gesperrt ist. Eine solche Konfiguration ermöglicht es also, einerseits ein Einspannen der Funktionseinrichtung mittels kraftarmen Betätigens der Betätigungseinrichtung zu ermöglichen, andererseits bei eingespannter Funktionseinrichtung eine Rückübertragung einer Kraft, insbesondere ausgelöst durch eine Schüttelbewegung einer Schüttelplatte, auf die Betätigungseinrichtung zu inhibieren.

Die Positionieranschläge, die Betätigungseinrichtung und das Kraftübertragungselement können an dem Trägerelement angeordnet und gemeinsam gegenüber dem Grundträger bewegbar sein. Das Trägerelement kann als Platte mit zwei gegenüberliegenden Hauptoberflächen gebildet sein, wobei an einer dieser Hauptoberflächen die Positionieranschläge und an der anderen dieser Hauptoberflächen die Betätigungseinrichtung und das Kraftübertragungselement angeordnet sein können. Das Trägerelement kann daher abnehmbar von dem Grundkörper vorgesehen werden. Die funktionalen Komponenten können somit vor äußeren Einflüssen geschützt angrenzend an den Grundkörper angeordnet sein.

An dem Grundkörper kann eine exzentrisch montierte Welle (Exzenterwelle) rotierfähig angeordnet sein, die in eine Aussparung in dem Kraftübertragungselement des Trägerelements eingreift und zum Ausüben einer orbitalen Schüttelbewegung des Grundkörpers antreibbar sein kann. Insbesondere kann eine zentrale kreisförmige Aussparung in einem als Kupplungsscheibe ausgebildeten Kraftübertragungselement vorgesehen sein, in die eine exzentrisch rotierende zylinderförmige Welle zum Übertragen einer orbitalen Schüttel- oder Mischbewegung eingreifen kann.

An dem Grundkörper kann eine oder kann eine Mehrzahl von Aussparungen mit jeweils einem darin vorgesehenen Magnetelement gebildet sein. Ein oder eine Mehrzahl von Bolzen des Trägerelements mit jeweils einem daran vorgesehenen Magnetelement kann in der einen oder der Mehrzahl von Aussparungen aufnehmbar sein. Der Grundkörper kann an dem Trägerelement mittels einer anziehenden Kraft zwischen den Magnetelementen des Trägerelements und den Magnetelementen des Grundkörpers befestigbar sein. Somit kann eine berührungslose, magnetische Befestigung des Trägerelements an dem Grundkörper erfolgen, die für einen Benutzer intuitiv bedienbar ist. Ferner verhindert eine entsprechende Formkodierung, die aus der Relativanordnung zwischen Bolzen und Aussparungen resultiert, eine fehlerhafte Montage.

Zumindest ein Teil der Bolzen kann jeweils ein oder mehr Resonanzdämpfelemente, insbesondere elastische Ringe, aufweisen, die im Falle einer resonanten Schüttelbewegung (und nur dann) in den Aussparungen gegen den Grundkörper drücken, um die Vorrichtung außer Resonanz zu bringen. Unter unerwünschten Bedingungen, insbesondere bei Betrieb mit einer ungünstigen Schüttelfrequenz, kann es anschaulich zu einem Aufschaukeln der Vorrichtung kommen, so dass diese unerwünscht in eine Resonanzschwingung gelangt. In diesem Resonanzzustand werden die Resonanzdämpfelemente, die zum Beispiel als Gummiringe ausgebildet sein können, die zur Reibungsminimierung beschichtet sein können, seitlich gegen die Mantelinnenfläche des Aussparungen gedrückt. Dies dämpft die Schwingung, womit das System wieder außer Resonanz gebracht werden kann. Somit kann mit konstruktiv einfachen Mitteln ein selbstregelndes System geschaffen werden.

An dem Grundkörper kann eine Mehrzahl (insbesondere drei) von Kugelaufnahmen mit darin angeordneten (insbesondere drei) Kugeln gebildet sein, auf welchen Kugeln das Trägerelement aufliegt. Gemäß einem Ausführungsbeispiel können die Kugeln die einzigen Auflagepunkte des Trägerelements sein, was einen reibungsarmen und daher energiearmen Betrieb garantiert. Die oberseitigen bzw. unterseitigen Auflagepunkte der Kugeln können ein- oder beidseitig an eine Materialfläche angreifen, die mit dem Material der Kugeln reibungsarm zusammenwirkt.

An dem Grundkörper (oder alternativ an dem Trägerelement) kann ein bewegbares Maschinenelement, zum Beispiel ein Servohebel, angeordnet sein, wobei mittels maschinengesteuerten (insbesondere prozessorgesteuerten) Führens, zum Beispiel Schwenkens, des bewegbaren Maschinenelementes die Betätigungseinrichtung betätigbar ist. Hierfür kann die Betätigungseinrichtung eine Nase oder dergleichen aufweisen, gegen die das bewegbare Maschinenelement gedrückt werden kann, um die Betätigungseinrichtung maschinengesteuert zu betätigen. Somit kann mittels einer in dem Grundkörper integrierbaren Steuereinheit das Ein- bzw. Ausspannen der Funktionseinrichtung erfolgen.

Die Betätigungseinrichtung kann als bewegbares Maschinenelement ein Kupplungstück zum Kuppeln mit einer elektrischen Aktuatoreinrichtung aufweisen. Gemäß diesem Ausführungsbeispiel kann ein Betätigen der Betätigungseinrichtung automatisch durch ein elektronisches Steuersystem vorgenommen werden, ohne dass es eines Eingreifens eines Benutzers bedarf. Hierfür kann ein elektrischer Aktuator vorgesehen sein, der beispielsweise nach dem Servomotor-Prinzip fungieren kann.

In einem solchen Ausführungsbeispiel kann die Vorrichtung die elektrische Aktuatorvorrichtung selbst aufweisen. Zum Beispiel kann die elektrische Aktuatoreinrichtung zumindest teilweise oder vollständig in dem Grundkörper integriert sein. Diese elektrische Aktuatoreinrichtung kann zum Übertragen einer elektrischen Betätigungskraft auf das Kraftübertragungselement in das Kupplungsstück eingreifen. Mit anderen Worten kann die elektrische Aktuatoreinrichtung mechanisch mit dem Kupplungsstück zusammenwirken, um die Übertragung einer Kraft elektrischen Ursprungs auf das Betätigungselement zu ermöglichen. Eine solche Kraft führt dann unmittelbar zu einer Bewegung der Positionieranschläge gemäß einer Richtung und einer Amplitude dieser Kraft.

Zum Beispiel kann die elektrische Aktuatoreinrichtung eine Antriebswelle und einen daran angeordneten Hebelarm aufweisen. Die Antriebswelle kann rotierfähig eingerichtet sein und kann sich um ihre eigene Achse drehen. An der Antriebswelle angebracht kann ein transversal abstehender Hebelarm vorgesehen sein, in dessen Endabschnitt eine Ankopplung an einen Kraftübertragungsstift oder Ähnliches erfolgen kann, der in einer Linearführungsnut der Linearführungseinrichtung des Betätigungselements beweglich angeordnet sein kann. Auf diese Weise kann die elektrische Betätigungskraft effizient übertragen werden. Zu dieser Ausführungsform sind selbstverständlich eine Vielzahl von Alternativen möglich.

Die Positionieranschläge können in gegenüberliegenden Eckbereichen des Trägerelements angeordnet sein. Unter einem Eckbereich des Trägerelements kann insbesondere eine räumliche Position verstanden werden, an der äußere oder innere Kanten des Trägerelements winkelig, insbesondere im Wesentlichen orthogonal, aneinanderstoßen (wenngleich eine gewisse Abrundung in solchen Eckbereichen bzw. entlang solcher Kanten nicht ausgeschlossen sein muss). An oder unmittelbar benachbart zu einer solchen Position kann dann die entsprechende Komponente räumlich angeordnet sein oder anordbar sein. Gemäß einem exemplarischen Ausführungsbeispiel ist ein Positioniersystem zum ortsgenauen Positionieren einer Funktionseinrichtung wie zum Beispiel einer Mikrotiterplatte geschaffen, wobei die Funktionseinrichtung von einer unteren Seite durch einen Grundkörper der Vorrichtung gestützt werden kann, in Eckbereichen von einander gegenüber liegenden Positionieranschlägen der Vorrichtung gestützt werden kann und die Positionieranschläge durch eine Betätigungseinrichtung manuell oder automatisch so verfahren werden können, dass diese entweder ein kraftloses Aufsetzen der Funktionseinrichtung auf den Grundkörper ohne Klemmwirkung der Positionieranschläge oder ein kraft- bzw. formschlüssiges Zentrieren der Funktionseinrichtung ermöglichen kann. In letzterem Betriebszustand drücken die Positionieranschläge anschaulich aus zwei gegenüberliegenden Richtungen auf gegenüberliegende Ecken der zum Beispiel rechteckförmigen Funktionseinrichtung, so dass diese unter dem Einfluss der Klemmwirkung in vorgebbarer Weise zweidimensional symmetrisch positioniert werden kann. Die hohe Positionsgenauigkeit, die mit einer Vorrichtung gemäß einem exemplarischen Ausführungsbeispiel der Erfindung erreicht werden kann, beruht insbesondere darauf, dass ein zentrales Kraftübertragungselement in einen zentralen Abschnitt der Vorrichtung, insbesondere in der Nähe eines Zentrums der Vorrichtung, angeordnet sein kann, das in Wirkverbindung mit den zum Beispiel in gegenüberliegenden Eckbereichen angeordneten Positionieranschlägen und mit der Betätigungseinrichtung steht. Dadurch kann der Benutzer in einfacher Weise eine Aktuatorbewegung an der Betätigungseinrichtung vornehmen, zum Beispiel eine einfache Schiebebewegung, was einen deterministischen Kraftübertragungsmechanismus in Gang setzt, durch welchen letztlich die beiden Positionieranschläge auf gegenüberliegende Ecken der Funktionseinrichtung entsprechende Klemmkräfte ausüben. Dies garantiert nicht nur ein hochgenaues Positionieren der Funktionseinrichtung bezüglich der Vorrichtung, sondern führt auch zu einer zuverlässigen Betätigbarkeit. Darüber hinaus ist das System mechanisch stabil, selbst dann, wenn dieses System mit höchster Präzisionsanforderung betrieben werden soll (zum Beispiel wenn die Funktionseinrichtung eine Vielzahl von Flüssigkeit-Wells aufweist, in welchen mittels eines Pipettierroboters Fluide injiziert werden sollen und/oder wenn auf die Funktionseinrichtung eine definierte Rüttelbewegung, zum Beispiel eine Orbitalbewegung, zum Mischen der fluidischen Proben eingesetzt wird).

Alternativ oder ergänzend können die Positionieranschläge an anderer Stelle als in gegenüberliegenden Eckbereichen des Trägerelements angeordnet sein. Zum Beispiel ist es möglich, dass Positionieranschläge an Kanten (zum Beispiel Seitenmitten) des Grundkörpers angeordnet sind, um nicht Ecken, sondern Kanten (zum Beispiel Seitenmitten) der Funktionseinrichtung klemmend in Eingriff zu nehmen.

Die Betätigungseinrichtung kann in einem (oder nahe einem) anderen Eckbereich des Grundkörpers angeordnet sein als die Positionieranschläge. Es kann aber vorteilhaft sein, die Betätigungseinrichtung nicht in einem Eckbereich, sondern zum Beispiel an einer Seitenkante des Grundkörpers anzuordnen, insbesondere zum Bereitstellen einer Verschieberichtung parallel zu einer Seitenkante des Grundkörpers und/oder der Funktionseinrichtung.

Die Vorrichtung kann zum Zentrieren der Funktionseinrichtung bezüglich eines Mittelpunkts (oder eines anderen vorgegebenen Referenzpunktes) des Trägerelements eingerichtet sein. Zum Beispiel für automatische Pipettieranforderungen kann es wünschenswert sein, eine Funktionseinrichtung in räumlich sehr genau definierter Weise bezüglich der Vorrichtung zu positionieren, damit ein entsprechendes Positionssignal an die Pipettiervorrichtung übermittelt werden kann, was ein ortsgenaues Pipettieren oder dergleichen ermöglicht. Gemäß dem beschriebenen Ausführungsbeispiel ist die Anordnung der Positionieranschläge so konfiguriert, dass in Abwesenheit einer von einem Benutzer ausgeübten Kraft die Funktionseinrichtung immer wieder in das Zentrum der Vorrichtung zurückgetrieben wird. Dies erfolgt ohne eine aufwendige Justage, sondern kann allein durch die Kraftkopplung zwischen den zumindest zwei Positionieranschlägen und dem Kraftübertragungselement sowie der Betätigungseinrichtung unter gleichzeitiger Ausübung einer vorbestimmten Vorspannung, die auf die Positionieranschläge einwirken kann, erreicht werden.

Die Vorrichtung kann insbesondere zum Positionieren einer Mikrotiterplatte als Funktionseinrichtung eingerichtet sein. Unter einer Mikrotiterplatte kann insbesondere ein Laborgerät zur Untersuchung von Probeneigenschaften, zum Beispiel für eine Absorptionsmessung in Photometern oder für High Throughput-Screening-Prüfungen in der Pharma- und Pflanzenschutzforschung, verstanden werden. Eine solche Mikrotiterplatte kann eine rechteckige Kunststoffplatte aufweisen, die aber auch aus Glas oder anderen Materialien hergestellt werden kann. Eine solche Mikrotiterplatte kann viele voneinander isolierte Näpfchen oder Wells in Zeilen und Spalten enthalten. Abmessungen von manchen Mikrotiterplatten sind standardisiert. Folglich kann mit der erfindungsgemäßen Positioniervorrichtung auch eine standardisierte Mikrotiterplatte hochgenau zentriert oder anderweitig in vorgebbarer Weise positioniert werden, was das Zusammenwirken mit weiteren Komponenten (Pipettierautomat oder Photometeranordnung) stark vereinfacht.

Das Trägerelement kann als eine Adapterplatte ausgestaltet sein, die zum Aufnehmen der Funktionseinrichtung eingerichtet sein kann. Das Trägerelement kann also speziell auf eine ganz bestimmte Funktionseinrichtung hin angepasst sein. Zum Beispiel kann eine Formkodierung des Trägerelements mit einer entsprechenden Formkodierung der Funktionseinrichtung korrespondieren, so dass ein fehlerhaftes Aufsetzen der Funktionseinrichtung auf das Trägerelement vermieden ist, da in einem solchen Fall ein Formschluss vermieden sein kann.

Das Trägerelement oder der Grundkörper kann eine darin integrierte Temperiereinheit zum Temperieren einer in der Funktionseinrichtung aufgenommenen fluidischen Probe aufweisen. Eine solche Temperiereinheit kann zum Beispiel eine Ohm'sche Temperiereinheit sein, welche mittels Ohm'scher Verluste eines durch das Trägerelement oder den Grundkörper fließenden elektrischen Stroms eine Erwärmung der Fluide der Funktionseinrichtung ermöglichen. Alternativ kann ein solches Temperieren wahlweise ein Erwärmen oder ein Abkühlen aufweisen, was zum Beispiel mittels eines Peltierelements erreicht werden kann. Auch andere Temperiersysteme, zum Beispiel unter Verwendung eines durch eine Kavität in dem Trägerelement oder dem Grundkörper fließenden Kühl- oder Heizmediums (zum Beispiel Wasser) kann eingesetzt werden. Mittels einer solchen Temperierung kann zum Beispiel entweder die Temperaturen einer Probe konstant gehalten werden oder kann alternativ ein vorbestimmter Temperaturzyklus durchfahren werden. Letzteres kann zum Beispiel für PCR-Analysen ("Polymerase Chain Reaction") vorteilhaft oder wünschenswert sein. Die Temperiereinheit kann benutzerdefiniert einstellbar sein oder kann selbsttätig bzw. reguliert fungieren. Zum Beispiel kann die Temperiereinheit basierend auf einer von einem Temperaturfühler gemessenen Temperatur auf eine bestimmte Temperatur eingeregelt werden.

Aufgrund der verschiedenen Funktionen des Trägerelements (zum Beispiel Halten, Temperieren, andere Funktionen sind möglich) ist es möglich, das Trägerelement speziell angepasst auf die Bedürfnisse einer Analyse auszutauschen oder auf dem Grundkörper zu montieren, um die Flexibilität zu erhöhen. Zum Beispiel kann hierfür ein Set mehrerer unterschiedlicher Trägerelemente zum Einsatz kommen, die alle auf dem Grundkörper montierbar sein können.

Die Positionieranschläge können ausschließlich in zwei gegenüberliegenden ersten Eckbereichen des Grundkörpers angeordnet sein. Mit anderen Worten kann gemäß einem Ausführungsbeispiel der Erfindung ein erster Eckbereich eines rechteckigen Trägerelements mit einem ersten Positionieranschlag versehen sein, und ein diagonal entgegenliegender zweiter Eckbereich des rechteckigen Trägerelements mit einem zweiten Positionieranschlag versehen sein. Die anderen beiden Eckbereiche der Vorrichtung können dann von entsprechenden Positionieranschlägen frei sein. Durch das Einsetzen von genau zwei korrespondierenden und gegenüberliegenden Paaren von Positionierstücken kann sowohl ein Einklemmen von Ecken der Funktionseinrichtung und somit ein sicheres Positionieren erreicht werden als auch eine Überbestimmung von Positionierpunkten vermieden werden, welche dann zu einem ungenauen Positionieren der Funktionseinrichtung in der Vorrichtung führen kann. Simultan ist eine solche Konfiguration einfach handhabbar und führt zu einem geringen Gewicht und kleiner Bauweise der Vorrichtung.

Die Positionieranschläge können in jedem zugehörigen Eckbereich mittels zweier Anschlagelemente mit zueinander senkrechten Anschlaglinien zum Anliegen an ein Eck der Funktionseinrichtung gebildet sein. Anders ausgedrückt kann in einem beliebigen Eckbereich, in dem eine Längskante und eine dazu orthogonale Querkante der Funktionseinrichtung befestigt werden soll, ein erstes Anschlagelement vorgesehen sein, das eine Kraftkomponente einer ersten Richtung auf die Funktionseinrichtung ausübt. Ferner kann ein zweites Anschlagelement vorgesehen sein, das eine zu der ersten Richtung senkrechte zweite Kraftkomponente generiert. Hierbei liegt entlang einer zum Beispiel geraden Linie eine Innenlinie (oder eine Innenfläche) des jeweiligen Anschlagelements an der Seitenwandfläche der Funktionseinrichtung an. Bei andersartig geformten Funktionseinrichtungen, zum Beispiel runden oder ovalen Probenbehältern (zum Beispiel Petrischalen) kann die Anordnung der Anschlagelemente entsprechend der jeweiligen Geometrie angepasst werden.

Alternativ können die Positionieranschläge in einem jeweiligen Eckbereich mittels zweier Anschlagelemente mit rundem Querschnitt zum Anliegen an die Funktionseinrichtungen gebildet sein. Ein solches Anschlagelement mit rundem Querschnitt kann zum Beispiel ein zylindrischer Stift, insbesondere ein kreiszylindrischer Stift, oder ein konischer Stift sein. Ein kreiszylindrischer Stift hat den Vorteil eines geringen Aufwands und kann anschaulich mit einer Punktkopplung auf einen entsprechenden Punkt der Funktionseinrichtung einwirken. Konische Stifte haben den Vorteil einer hohen Flexibilität und können sich zum Beispiel hin zu dem Trägerelement, an dem sie montiert sein können, verjüngen. Durch die Verjüngung der konischen Stifte zum Trägerelement kann eine Normalkraft zwischen Trägerelement und Funktionseinrichtung erzeugt werden. Ferner ist eine Anpassung an unterschiedlich große Funktionseinrichtungen möglich.

Die Positionierstifte zum Klemmen können eingerichtet sein, Mikroplatten mit unterschiedlichen Sockelhöhen zu fixieren. Insbesondere können die Positionierstifte geformt sein, Sockelhöhen mit 2.5 mm, 4.0 mm und 6.1 mm zu unterstützen. Hierfür können die Stifte ausgelegt sein als Stifte mit insbesondere drei nach oben hin größer werden O-Ringen, wobei die O-Ringe an der oberen Mikrotiterplatten-Stegkante angreifen. Es ist auch möglich, die Stifte aus Vollmaterial (zum Beispiel Edelstahl) mit entsprechenden Fasen und Kanten auszulegen. Die angefasten Kanten entsprechen im Wesentlichen der Funktion der O-Ringe.

Alternativ können die Anschlagelemente als Stifte mit einer Mehrzahl von daran angebrachten Ringen unterschiedlichen Außendurchmessers gebildet sein. Solche Ringe können zum Beispiel aus einem flexiblen Material, wie zum Beispiel Gummi, gefertigt werden. Es ist möglich, dass ein Außendurchmesser eines jeweiligen Rings umso größer ist, je weiter entfernt ein solcher Ring von dem Trägerelement angeordnet ist. Dies ermöglicht es, Mikrotiterplatten unterschiedlicher Größen in das Gerät einzusetzen.

Alternativ können die Anschlagelemente als Stifte mit einer Mehrzahl von daran integral geformten Stufen unterschiedlichen Außendurchmessers gebildet sein. Solche Stufen können zum Beispiel einstückig bzw. einstoffig mit einem Kern der Stifte gefertigt werden. Es ist möglich, dass ein Außendurchmesser einer jeweiligen Stufe umso größer ist, je weiter entfernt eine solche Stufe von dem Trägerelement angeordnet ist. Dies ermöglicht es, Mikrotiterplatten unterschiedlicher Größen in das Gerät einzusetzen.

Es ist auch möglich, die Positionieranschläge als Stifte mit einem kreiszylindrischen Abschnitt und einem konischen Abschnitt auszubilden. Insbesondere kann ein an dem Trägerelement montierter Abschnitt kreiszylindrisch und ein an den kreiszylindrischen Abschnitt angrenzender oberer Abschnitt konisch sein. Dies kann zu einem Platzgewinn bei einem Handhaben bzw. einem Herausheben von Komponenten wie zum Beispiel einer Platte führen.

Ferner kann die Vorrichtung eine elektrisch steuerbare Pipettiereinrichtung aufweisen, die zum Pipettieren eines Fluids in Kavitäten der Funktionseinrichtung eingerichtet sein kann. Zum Beispiel kann eine Funktionseinrichtung als Mikrotiterplatte mit zum Beispiel 1536 Kavitäten eingesetzt werden. Dies zeigt, dass sowohl die Anzahl der Wells oder Näpfchen als auch die Anforderungen an die Positioniergenauigkeit bei solchen Mikrotiterplatten und ähnlichen Funktionseinrichtungen sehr hoch ist. Ein korrespondierender Pipettierroboter kann eine Vielzahl von Pipetten steuern, von denen jede in ein zugehöriges Well eine vorgegebene Menge einer vorgegebenen Substanz oder eine Substanzmischung hinein pipettieren oder heraus pipettieren kann. Schon bei kleinen Positionsungenauigkeiten kann diese präzise Zu- oder Abführung von Fluiden in die jeweiligen Wells negativ beeinflusst werden. Dadurch ist mit einer solchen automatischen Pipettiereinrichtung die erfindungsgemäße Positioniereinrichtung besonders vorteilhaft einsetzbar. Bei einer elektronisch gesteuerten Betätigungseinrichtung kann die elektronisch steuerbare Pipettiereinrichtung von derselben elektronischen Steuereinheit (zum Beispiel eine CPU, Central Processing Unit) gesteuert werden wie die elektrische Aktuatoreinrichtung. Es ist aber auch möglich, dass zwei separate Steuereinheiten zum Einsatz kommen.

Die Vorrichtung kann alternativ oder ergänzend zu einer Pipettiereinrichtung eine Schütteleinrichtung aufweisen, die zum Schütteln der auf einem Grundkörper montierten Probenträger eingerichtet sein kann. Während der Durchführung eines biochemischen Experiments kann es erforderlich oder wünschenswert sein, dass eine oder mehrere Komponenten oder Substanzen, die in ein jeweiliges Well der Funktionseinrichtung eingefüllt sind, miteinander gemischt werden oder in Mischbewegung gehalten bleiben (zum Beispiel um eine Phasentrennung zu vermeiden). Ein solches Mischen kann mittels einer Schüttelbewegung erreicht werden. Mittels des erfindungsgemäßen Vorsehens der Positionieranschläge kann auch während oder nach einer Schüttelbewegung eine Zentrierung der Funktionseinrichtung bezüglich der Vorrichtung aufrecht erhalten bleiben.

Zum Beispiel kann eine solche Schüttelvorrichtung realisiert sein, wie in Fig. 24, Fig. 25 und den nachfolgenden Figuren der WO 2008/135565, in Kombination mit der dazugehörigen Beschreibung, beschrieben ist. Diese Ausführungsbeispiele werden mittels expliziter Bezugnahme in die Offenbarung dieser Patentanmeldung mit einbezogen, was die Konfiguration einer Schütteleinrichtung ermöglicht.

Insbesondere kann erfindungsgemäß die Schütteleinrichtung zum Beaufschlagen der Funktionseinrichtung mit einer Orbitalbewegung (zwecks Schüttelns) eingerichtet sein. Es ist möglich, dass eines oder mehrere Kompensationsgewichte an einer zum Beispiel exzentrischen Antriebswelle einer solchen Schüttelvorrichtung montiert ist oder sind, so dass eine unausgeglichene Masse der Vorrichtung während der Schüttelbewegung zumindest teilweise kompensiert sein kann. Insbesondere können entlang der Welle zwei einander gegenüberliegende Ausgleichsgewichte angeordnet werden. Es ist auch möglich, mittels magnetischer Elemente während des Schüttelns ein Zusammenhalten von verschiedenen Komponenten der Vorrichtung sicherzustellen.

Bei der Vorrichtung kann das Kraftübertragungselement eine drehbar gelagerte Kupplungsscheibe aufweisen, die mechanisch mit der Betätigungseinrichtung und den Positionieranschlägen gekoppelt sein kann. Unter einer Kupplungsscheibe kann insbesondere eine flache scheibenartige Anordnung, zum Beispiel mit einer kreisförmigen Grund- und Deckfläche, verstanden werden, welche sehr flach ausgebildet sein kann (zum Beispiel als Kraftübertragungsplatte). Bevorzugt ist somit eine drehbar gelagerte Kupplungsscheibe, da diese eine flache Bauart und somit eine platzsparende Bauweise ermöglicht. Zum Beispiel kann bei dieser drehbar gelagerten Kreiskupplungsscheibe ein Kreisdurchmesser mindestens dreimal, insbesondere mindestens fünfmal, weiter insbesondere mindestens zehnmal, so groß sein wie eine Zylinderhöhe. An einer oberen (oder unteren) Oberfläche einer solchen Kupplungsscheibe, die in einem zentralen Abschnitt drehbar um einen Mittelpunkt gelagert sein kann, können die Betätigungseinrichtung und die Positionieranschläge angekoppelt sein.

Die Koppelstange bzw. die weiteren Koppelstangen können mit der drehbar gelagerten Kupplungsscheibe gelenkig verbunden und mit der Betätigungseinrichtung bzw. dem jeweiligen Positionieranschlag mit seiner jeweiligen Linearführung gelenkig verbunden sein. Solche (weiteren) Koppelstangen können als starre langgestreckte Streben ausgeführt werden, welche an zwei Endabschnitten gelenkige Lager aufweisen können. An diesen Lagern kann eine solche (weitere) Koppelstange gelenkig drehbar angeordnet sein. Ein gegenüberliegender zweiter Endabschnitt einer solchen (weiteren) Koppelstange kann an der drehbar gelagerten Kupplungsscheibe gelenkig montiert sein.

Diese (weiteren) Koppelstangen können abgewinkelt sein und daher einen ersten geradlinigen Abschnitt aufweisen und einen daran sich anschließenden zweiten geradlinigen Abschnitt aufweisen. Mittels einer solchen abgewinkelten Anordnung ist eine effiziente Kraftumlenkung und eine verschleißarme Lagerung möglich.

Die Koppelstange und die weiteren Koppelstangen können zum Montieren an der Kupplungsscheibe in koplanarer Weise angeordnet sein. Mit anderen Worten können alle Koppelstangen innerhalb einer gemeinsamen Ebene angeordnet sein, was eine flache Bauart ermöglicht. Eine solche Konfiguration kann auch Kräfte senkrecht zu einer solchen Montageebene reduzieren oder minimieren, was den Verschleiß der drehbar gelagerten Elemente und der Koppelstangen verringern kann.

Zum Beispiel können alle Koppelstangen auf einer planaren (zum Beispiel kreisflächigen) Deckfläche der Kupplungsscheibe montiert sein. Eine solche Konfiguration kann leicht montierbar sein und ermöglicht durch selektive Einstellbarkeit eines jeweiligen Montageradius der Koppelstange bezüglich der drehbar gelagerten Kupplungsscheibe eine Anpassbarkeit des Hebelarms auf eine zugeordnete Aufgabe der jeweiligen Komponenten. Damit ist ein weiterer Freiheitsgrad für die Einstellbarkeit der Kraftübertragungscharakteristik der Vorrichtung gegeben.

Auch die Vorspanneinrichtung und die Betätigungseinrichtung können zueinander koplanar, das heißt in einer Ebene, montiert sein. Dies trägt weiter zu der flachen Bauart der Vorrichtung bei.

Gemäß einem exemplarischen Ausführungsbeispiel weist die Vorrichtung eine bewegbar, insbesondere schwenkbar, gelagerte Koppelstange auf, mittels welcher die Betätigungseinrichtung mit dem Kraftübertragungselement gekoppelt ist, wobei die Koppelstange einen Längeneinstellmechanismus zum Einstellen einer Länge der Koppelstange (die einen Abstand zwischen der Betätigungseinrichtung und dem Kraftübertragungselement definiert) aufweist. Indem ein Längeneinstellmechanismus vorgesehen ist, kann die Anordnung von einem Benutzer (oder fabrikseitig) auf die jeweiligen Bedürfnisse variabel eingestellt werden. Insbesondere Toleranzen einzelner Bauteile, zum Beispiel der Funktionseinrichtung, können dadurch ausgeglichen werden.

Gemäß einem exemplarischen Ausführungsbeispiel ist der Längeneinstellmechanismus durch ein erstes Koppelstangenteil und durch ein zweites Koppelstangenteil gebildet (optional kann mindestens ein drittes Koppelstangenteil vorgesehen werden), wobei das erste Koppelstangenteil und das zweite Koppelstangenteil zum Einstellen der Länge der Koppelstange aneinander mit einstellbarer Überlappung befestigbar sind. Die beiden Koppelstangenteile können starre Strukturen seien, die entlang einander verschiebbar sind, wobei ein Langloch in einem der Koppelstangenteile mit einem Schraubloch in dem anderen Koppelstangenteil in Deckung gebracht werden kann und eine oder mehrere Fixierschrauben (ggf. unter Verwendung einer Mutter oder dergleichen) oder sonstige Befestigungselemente in die übereinanderliegenden Koppelstangenteile zur Befestigung an einander eingeführt und befestigt werden können. Zum Ändern der Länge hat ein Benutzer dann nur das Befestigungselement zu lösen und einen anderen Überlappungsgrad einzustellen.

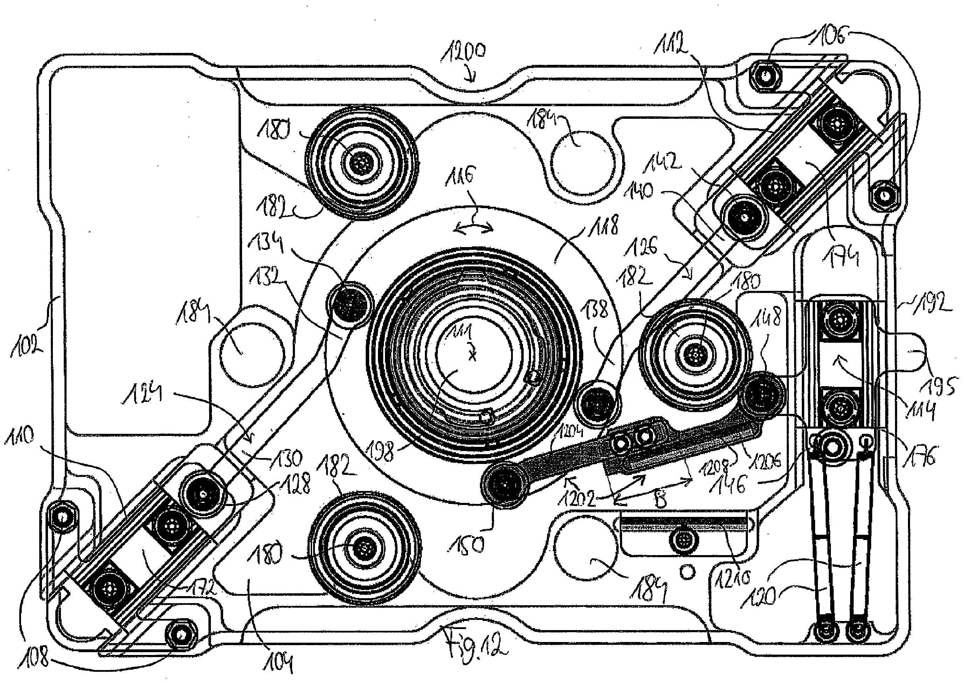

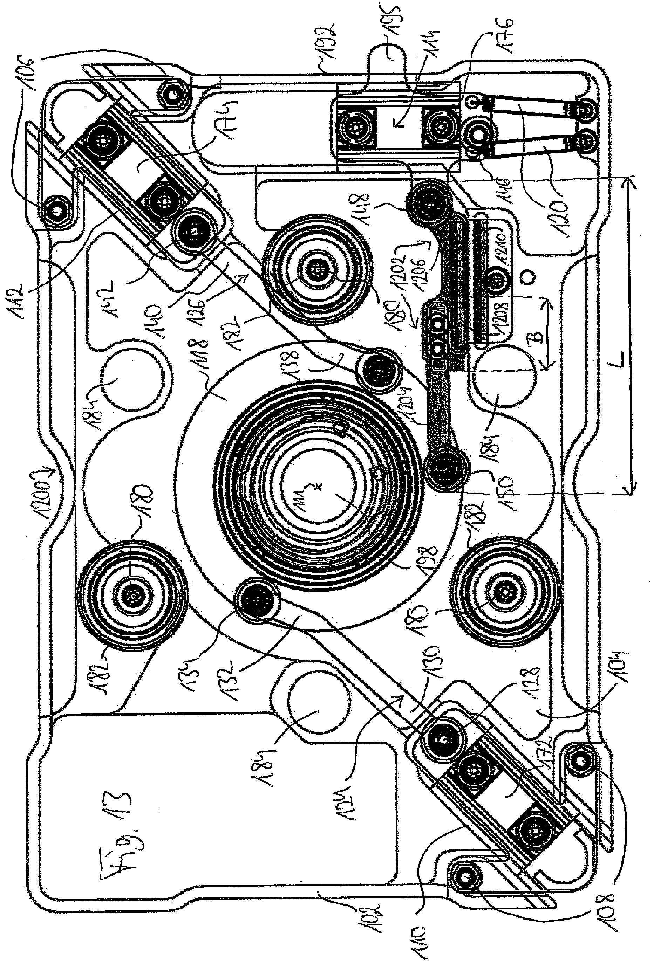

Gemäß einem exemplarischen Ausführungsbeispiel weist die Vorrichtung eine bewegbar, insbesondere schwenkbar, gelagerte Koppelstange auf, mittels welcher die Betätigungseinrichtung mit dem Kraftübertragungselement gekoppelt ist, und die einen mitbewegbaren ersten Magneten enthält. Ein zweiter Magnet ist an dem Trägerelement oder an dem Grundkörper angebracht und bewirkt gemeinsam mit dem ersten Magneten eine anziehende Kraft (anders ausgedrückt sind die Magneten so ausgeführt, dass sie sich gegenseitig anziehen). Der erste Magnet und der zweite Magnet sind derart angeordnet, dass im die Funktionseinrichtung in Eingriff nehmenden Betriebszustand ein beliebiger Abstand zwischen dem ersten Magnet und dem zweiten Magnet kleiner ist als im die Funktionseinrichtung freigebenden Betriebszustand. Bei kleinem Abstand können die Magneten parallel zueinander angeordnet sein (siehe Fig. 12), bei größerem Abstand können die Magneten winkelig zueinander angeordnet sein (siehe Fig. 13). Mit anderen Worten kann der erste Magnet starr an der Koppelstange befestigt sein, wobei der zweite Magnet starr an Trägerelement oder Grundkörper befestigt sein kann. Während einer Überführung der Vorrichtung zwischen den beiden Betriebszuständen bewegt (insbesondere dreht) sich die Koppelstange, womit sich auch der mittlere oder effektive (bezogen auf die Stärke der Anziehungskraft) Abstand zwischen den Magneten und somit die Größe der Anziehungskraft verändert. Die Kraft ist im die Funktionseinrichtung in Eingriff nehmenden Betriebszustand größer und hält die Koppelstange und folglich die Betätigungseinrichtung somit im Schließzustand.

Zumindest ein Teil der Magneten kann als Permanentmagnet gebildet sein und/oder zumindest ein Teil der Magneten kann als Elektromagnet gebildet sein.

Gemäß einem exemplarischen Ausführungsbeispiel können der erste Magnet und der zweite Magnet im die Funktionseinrichtung in Eingriff nehmenden Betriebszustand die anziehende Kraft in einer Richtung im Wesentlichen parallel zu einer Verschieberichtung der Betätigungseinrichtung ausüben. Die Kraft kann eine Richtung haben, welche einer unerwünschten Bewegungsrichtung der Betätigungseinrichtung entgegenwirkt und kann eine solche unerwünschte Bewegung daher hemmen.

Gemäß einem exemplarischen Ausführungsbeispiel üben der erste Magnet und der zweite Magnet im die Funktionseinrichtung in Eingriff nehmenden Betriebszustand die anziehende Kraft in einer Richtung im Wesentlichen senkrecht zu einer Erstreckungsrichtung der Koppelstange aus. Dies fördert die im Wesentlichen senkrechte Ausrichtung von Koppelstange und Verschieberichtung der Betätigungseinrichtung.

Ein exemplarisches Ausführungsbeispiel der Erfindung verbindet ein orbitales Mischen mittels magnetischer Führung mit einem zentrischen Klemmen einer Mikroplatte. Ein vorteilhafter Aspekt ist, dass das zentrische Klemmen in Verbindung mit dem Schütteln/Mischen vereint werden kann. Beim Schütteln sollte die Mikroplatte automatisch zentrisch geklemmt werden, um insbesondere für hohe Mischgeschwindigkeiten bzw. Schüttelgeschwindigkeiten die Mikrotiterplatte sicher zu halten, da die Mikrotiterplatte sich sonst unerwünscht von der Vorrichtung ablösen könnte. Der Schüttler selbst hält immer in seiner Nullposition an, wobei die zentrische Klemmung die Mikrotiterplatte so präzise ausrichtet, dass eine hochgenaue Pipettierung in die Wells ermöglicht ist. Besonders bei 384- oder 1536-Well-Mikrotiterplatten und immer kleiner werdenden Well-Durchmessern ist dies ein wichtiges Erfordernis für eine automatische Pipettierung. Das automatische Öffnen erlaubt einerseits das Klemmen und anderseits die Freigabe der Platte für einen per Roboter-Greifer automatisch stattfindenden Wechsel der Mikrotiterplatte.

Im Folgenden werden exemplarische Ausführungsbeispiele der vorliegenden Erfindung mit Verweis auf die folgenden Figuren detailliert beschrieben.
Fig. 1 zeigt eine Draufsicht einer Positioniereinrichtung gemäß einem exemplarischen Ausführungsbeispiel der Erfindung in einem Betriebszustand, in dem eine nicht gezeigte Probenträgerplatte freigegeben ist und ein nicht gezeigtes Trägerelement von einer Oberseite der Positioniereinrichtung abgenommen ist.
Fig. 2 zeigt die Positioniereinrichtung aus Fig. 1 in einem anderen Betriebszustand, in dem die Probenträgerplatte (nicht gezeigt) von den Positionierecken in Eingriff genommen und das nicht gezeigte Trägerelement von der Oberseite der Positioniereinrichtung wiederum abgenommen ist.
Fig. 3 zeigt einen Teil einer Positioniereinrichtung gemäß einem exemplarischen Ausführungsbeispiel mit einer montierten Mikrotiterplatte.
Fig. 4 und Fig. 5 zeigen in Draufsicht Prinzipdarstellungen einer Positioniereinrichtung gemäß einem exemplarischen Ausführungsbeispiel der Erfindung, wobei in einem in Fig. 4 gezeigten Betriebszustand durch Betätigung einer Betätigungseinrichtung eine Probenträgerplatte zwischen Positionieranschlägen eingespannt werden kann, und wobei in einem in Fig. 5 gezeigten Betriebszustand die Probenträgerplatte zwischen den Positionieranschlägen eingespannt geschüttelt wird, ohne dass die Schüttelkraft die Betätigungseinrichtung unerwünscht in Bewegung setzen würde.
Fig. 6 zeigt eine räumliche Ansicht einer Positioniereinrichtung gemäß einem exemplarischen Ausführungsbeispiel der Erfindung in einem Betriebszustand, in dem noch keine Probenträgerplatte auf ein Trägerelement der Positioniereinrichtung aufgesetzt ist.
Fig. 7 zeigt die Positioniereinrichtung aus Fig. 6 nach Abnahme eines Trägerelements, aber mit einigen Komponenten, die im montierten Zustand an dem Trägerelement befestigt sind.
Fig. 8 zeigt die Positioniereinrichtung aus Fig. 6 und Fig. 7 in einem anderen Betriebszustand, in dem die Probenträgerplatte von den Positionierecken in Eingriff genommen ist.
Fig. 9 zeigt eine räumliche Unteransicht einer von einem Grundkörper abgenommenen Trägerplatte einer Positioniereinrichtung gemäß einem exemplarischen Ausführungsbeispiel der Erfindung.
Fig. 10 zeigt eine Querschnittsansicht einer Positioniereinrichtung gemäß einem exemplarischen Ausführungsbeispiel der Erfindung.
Fig. 11 zeigt eine andere Querschnittsansicht einer von einem Grundkörper abgenommenen Trägerplatte einer Positioniereinrichtung gemäß einem exemplarischen Ausführungsbeispiel der Erfindung.
Fig. 12 zeigt eine Draufsicht einer Positioniereinrichtung gemäß einem anderen exemplarischen Ausführungsbeispiel der Erfindung in einem Betriebszustand, in dem eine nicht gezeigte Probenträgerplatte freigegeben ist und ein nicht gezeigtes Trägerelement von einer Oberseite der Positioniereinrichtung abgenommen ist.
Fig. 13 zeigt die Positioniereinrichtung aus Fig. 12 in einem anderen Betriebszustand, in dem die Probenträgerplatte (nicht gezeigt) von den Positionierecken in Eingriff genommen und das nicht gezeigte Trägerelement von der Oberseite der Positioniereinrichtung wiederum abgenommen ist.

Gleiche oder ähnliche Komponenten in unterschiedlichen Figuren sind mit gleichen Bezugsziffern versehen.

Im Weiteren werden exemplarische Ausführungsbeispiele beschrieben, bei denen als Funktionseinrichtung eine Probenträgerplatte in einer Positioniereinrichtung aufgenommen wird. Selbstverständlich kann in jedem dieser Ausführungsbeispiele jede beliebige andere Funktionseinrichtung in der jeweiligen Positioniereinrichtung aufgenommen werden.

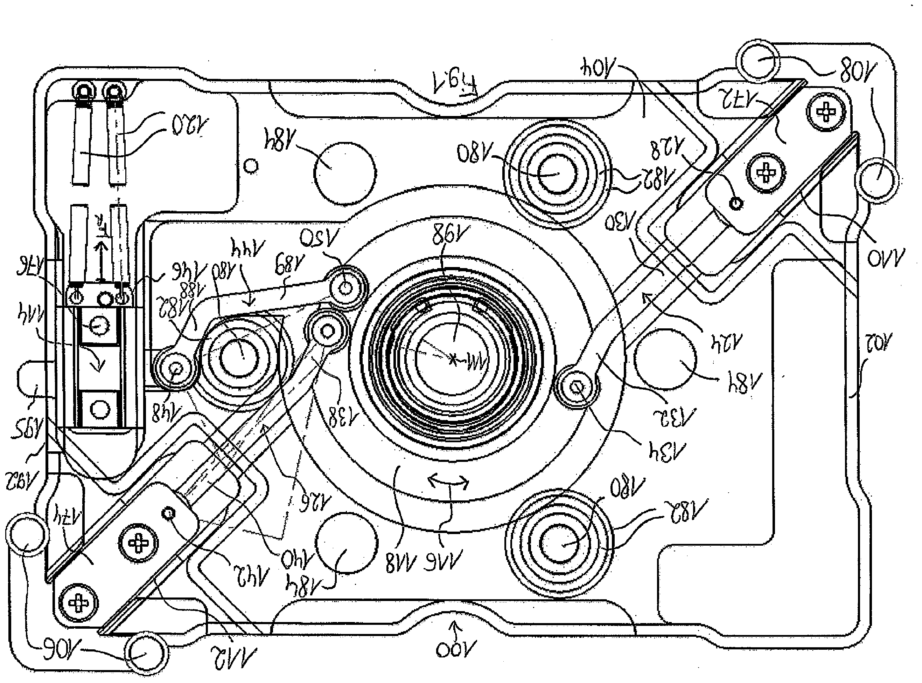

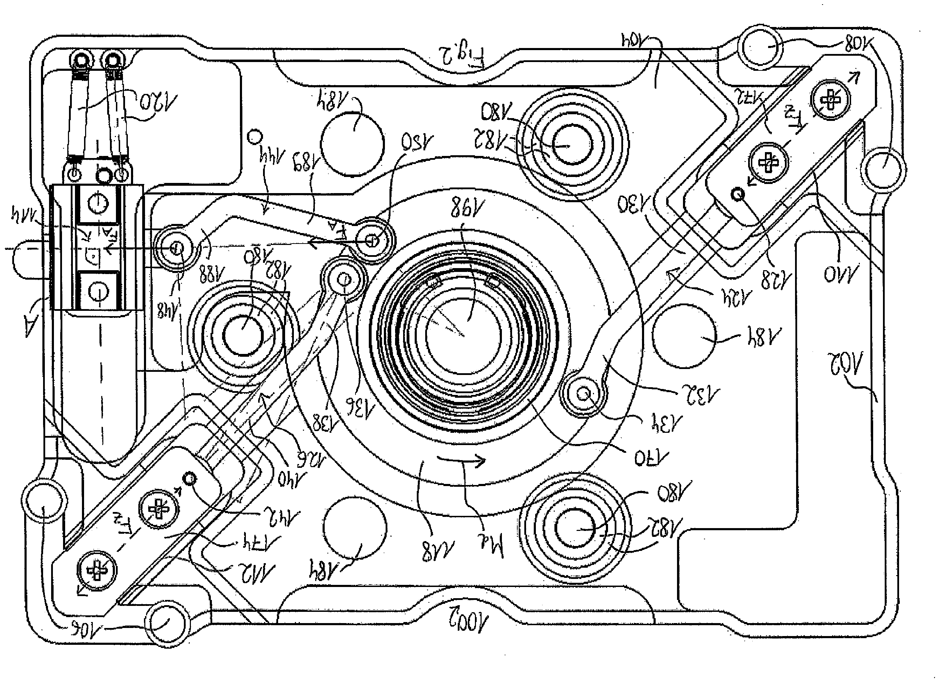

Im Weiteren wird Bezug nehmend auf **Fig. 1** und **Fig. 2** ein Probenhandhabungsgerät 100 gemäß einem exemplarischen Ausführungsbeispiel der Erfindung beschrieben.

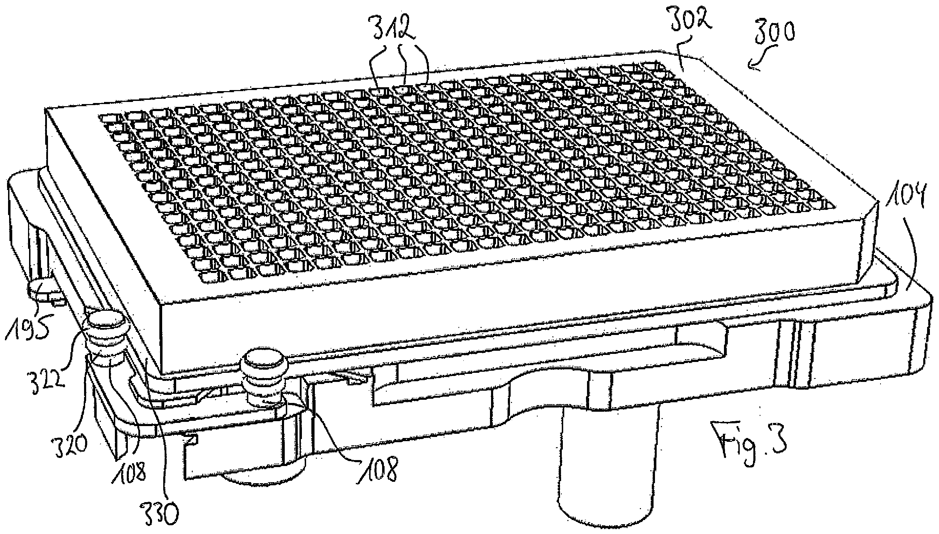

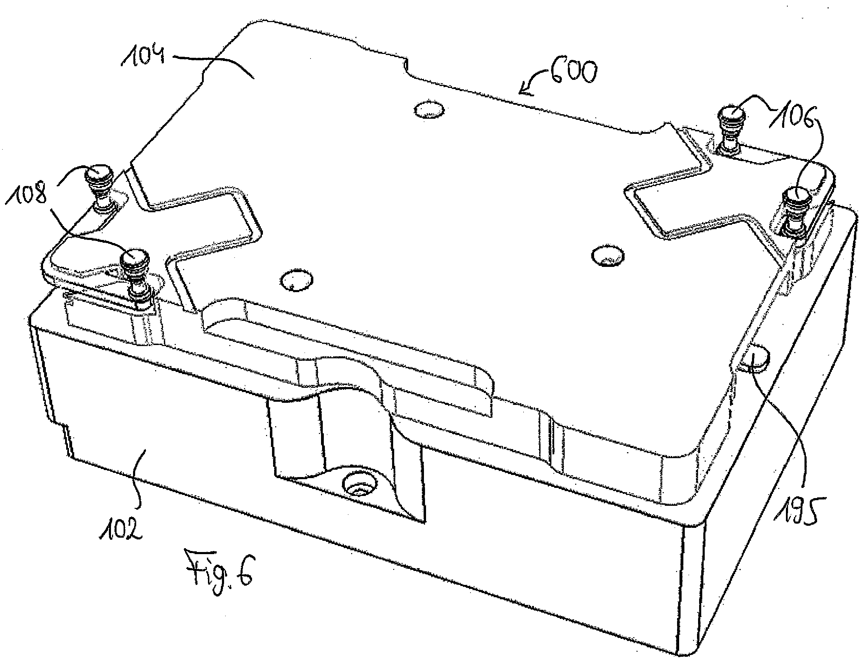

Zur besseren Erkennbarkeit der einzelnen Komponenten ist eine Trägerplatte 104 in Fig. 1 und Fig. 2 durchsichtig dargestellt. Trägerplatte 104 ist zum Beispiel in Fig. 3 und Fig. 6 gut zu erkennen.

Das Probenhandhabungsgerät 100 enthält einen in Draufsicht gezeigten im Wesentlichen rechteckigen Grundkörper 102 mit vier im Wesentlichen rechtwinkligen Eckbereichen. Auf dem Grundkörper 102 ist ein plattenförmiges Trägerelement 104 vorgesehen, an dem eine Mehrzahl unterschiedlicher Komponenten des Probenhandhabungsgeräts 100 untergebracht sind. Trägerelement 104 ist samt dieser Komponenten von dem Grundkörper 102 abnehmbar.

Grundkörper 102 und Trägerelement 104 können alternativ als gemeinsames einstückiges Bauteil gebildet sein, sind aber gemäß Fig. 1 als voneinander separierbare Komponenten gebildet. Der Grundkörper 102 kann ein feststehendes Grundgehäuse aufweisen, und das Trägerelement 104 kann bewegbar auf dem Grundkörper 102 montiert werden.

Zwei erste und zusammenwirkende, als Stifte ausgeführte Positionieranschläge 108 sind in einem gemäß Fig. 1 unteren linken Eckbereich des Trägerelements 104 angeordnet. In einem gegenüberliegenden Eckbereich des Trägerelements 104 sind zwei zusammenwirkende Stifte als Positionieranschläge 106 angebracht. Wie im Weiteren näher erläutert wird, dienen die Positionieranschläge 106, 108 dem Einspannen einer in Fig. 1 nicht gezeigten Probenträgerplatte, wie zum Beispiel einer Mikrotiterplatte.

Die Positionieranschläge 108 sind funktionell mit einer Linearführungseinrichtung 110 wirkgekoppelt. Anders ausgedrückt können bei Einwirken einer entsprechenden Kraft auf die Positionieranschläge 108 diese in Richtung eines Zentrums 111 des Probenhandhabungsgeräts 100 hin verschoben werden, indem die Positionieranschläge 108 in einer langlochartigen Nut der Linearführungseinrichtung 110 gleiten.

Entsprechend können die Positionieranschläge 106 in einer zugeordneten Linearführungseinrichtung 112 gleiten, so dass diese entweder gemeinsam mit den Positionieranschlägen 108 in Richtung des Zentrums 111 hin verschoben werden oder gemeinsam mit den Positionieranschlägen 108 von dem Zentrum 111 weg, hin zu den entsprechenden Ecken des Trägerelements 104 gleiten.

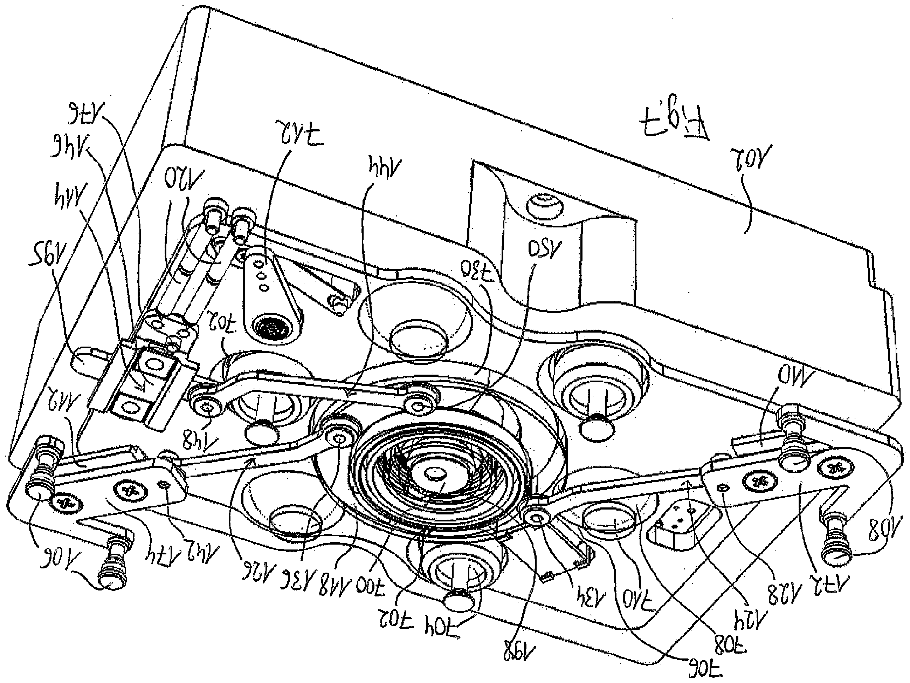

In einem seitlichen Randbereich des Trägerelements 104, angeordnet zwischen benachbarten Eckbereichen, ist eine Betätigungseinrichtung 114 untergebracht, die bei dem Ausführungsbeispiel gemäß Fig. 1 mittels Verschiebens eines Schiebers oder Aktuators 195 parallel zu einer Seitenkante 192 (gemäß Fig. 1 nach oben) von einem menschlichen Benutzer händisch bzw. manuell betätigt werden kann, indem die Betätigungseinrichtung 114 in Längsrichtung bezüglich des Grundkörpers 102 verschoben wird. Alternativ kann der Antrieb unter Verwendung einer elektrischen Aktuatoreinrichtung erfolgen. In einem solchen Ausführungsbeispiel kann ein in Fig. 1 nicht gezeigtes bewegbares Maschinenelement, zum Beispiel ein Servohebel (siehe Bezugszeichen 712 in Fig. 7), gegen einen vertikal (aus der Papierebene von Fig. 1 heraus) ausgerichteten Stift 176 drücken, um die Betätigungseinrichtung 114 zu betätigen.

Mittels Betätigens der Betätigungseinrichtung 114 durch Längeverschieben eines von einem Benutzer oder einer Maschine betätigbaren Aktuators 195 können die Positionieranschläge 106, 108 jeweils gemeinsam zwischen einem die Probenträgerplatte in Eingriff nehmenden Betriebszustand und einem die Probenträgerplatte frei gebenden, das heißt diese nicht in Eingriff nehmenden, Betriebszustand übergeführt werden. Fig. 1 zeigt den freigegebenen Betriebszustand, bei dem die Positionieranschläge 106, 108 weit in den Eckbereich des Trägerelements 104 hinein gedrängt sind. Fig. 2 dagegen zeigt den in Eingriff nehmenden Betriebszustand, in dem die Positionieranschläge 106, 108 näher bei dem Zentrum 111 des Trägerelements 104 angeordnet sind als gemäß Fig. 1.

Wie aus Fig.1 zu erkennen ist, korrespondiert der freigegebene Betriebszustand mit einer Stellung der Betätigungseinrichtung 114 näher bezüglich der Positionieranschläge 106 als in dem in Eingriff nehmenden Betriebszustand gemäß Fig. 2.

Um das Zentrum 111 drehbar, das heißt rotationsfähig (siehe Bezugszeichen 116), gelagert ist eine Kreisscheibe 118 als Kraftübertragungselement vorgesehen, die eine Betätigungskraft von der Betätigungseinrichtung 114 auf die Positionieranschläge 106, 108 derart überträgt, dass mittels Verschiebens der Stellung des Betätigungselements 114 von der in Fig. 1 gezeigten Position in die in Fig. 2 gezeigte Position zwangsläufig eine Verschiebung der Positionierelemente 106, 108 nach innen (das heißt in Richtung des Zentrums 111) oder nach außen (das heißt weg von dem Zentrum 111) erfolgen kann. Fig. 1 deutet an, dass das Trägerelement 104 über ein Lager 170 mit der drehbar gelagerten Kupplungsscheibe 118 gekoppelt ist.

Somit ist es mit dem Probenhandhabungsgerät 100 ermöglicht, dass eine Mikrotiterplatte mit im Wesentlichen rechteckförmigen Querschnitt auf dem zentralen Abschnitt des Trägerelements 104 aufgesetzt wird und in zwei gegenüberliegenden Eckbereichen direkt klemmend an die Positionieranschläge 106, 108 angrenzt, wenn sich das System in dem geschlossenen Zustand gemäß Fig. 2 befindet. In dem offenen Zustand gemäß Fig. 1 bleibt ein Abstand zwischen den Positionieranschlägen 106, 108 und der Mikrotiterplatte.

Somit dient die beschriebene Kraftübertragungsmechanik einer Zentrierung der Mikrotiterplatte bezüglich des Mittelpunkts 111 des Trägers 104 oder eines fixen Punktes des Grundkörpers 102. Dies resultiert aus der symmetrischen Aufhängung der Positionieranschläge 106, 108 bezüglich der mit ihrem Schwerpunkt im Zentrum 111 befindlichen Kreisscheibe 118.

Wie in jedem der hier offenbarten Ausführungsbeispiele kann auch in dem in Fig. 1 gezeigten Probenhandhabungsgerät 100 eine optionale Schütteleinrichtung in dem Grundkörper 102 und/oder in dem Trägerelement 104 integriert sein (nicht gezeigt), welche derart konfiguriert sein kann, dass die Mikrotiterplatte bei Aufnahme zwischen den Positionieranschlägen 106, 108 eine Orbitalbewegung durchführt und somit in Wells einer Mikrotiterplatte enthaltene Fluide (zum Beispiel eine Flüssigkeit und/oder ein Gas, wobei auch feste Bestandteile nicht ausgeschlossen sind) zuverlässig durchmischt werden können. Die Klemmwirkung der Positionieranschläge 106, 108 in der geschlossenen Stellung gemäß Fig. 2 kann selbst während einer solchen Orbitalbewegung die Mikrotiterplatte sicher und im Zeitmittel zentriert bezüglich des Zentrums 111 halten.

Der beschriebene Kraftübertragungsmechanismus wirkt mit einer als Spanneinrichtung dienenden Anordnung von Schraubenfedern 120 zusammen, die einen Eckbereich des Trägerelements 104 mit der Betätigungseinrichtung 114 verbindet (siehe Fig. 1 und Fig. 2). Ein (gemäß Fig. 1 oben links angeordneter) Eckbereich des rechteckförmigen Trägers 104 ist vollkommen frei von funktionalen Elementen, kann allerdings in anderen Ausführungsbeispielen mit beliebigen funktionalen Elementen bestückt werden. Die Schraubenfedern 120 können derart gespannt sein, dass diese eine Zugvorspannung auf die drehbar gelagerte Kupplungsscheibe 118 überträgt. Ein Ende jeder Feder 120 ist an dem Träger 104 befestigt, wobei deren anderes Ende mit der Betätigungseinrichtung 114 gekoppelt ist. Fig. 2 repräsentiert eine Grundstellung des Probenhandhabungsgeräts 100, das heißt einen Zustand, indem ein Benutzer bzw. eine elektrische Steuerung keine mechanische Belastung auf das Probenhandhabungsgerät 100 ausübt. Fig. 1 repräsentiert eine ausgelenkte Stellung des Probenhandhabungsgeräts 100, das heißt einen Zustand, in dem ein Benutzer bzw. eine elektrische Steuerung mittels einer mechanischen Belastung auf das Probenhandhabungsgerät 100 eine die Betätigungseinrichtung auslenkende Kraft ausüben. Während die Schraubenfedern 120 in der Grundstellung unbelastet sind, üben die Schraubenfedern 120 im ausgelenkten Zustand gemäß Fig. 1 eine rücktreibende Kraft F_{R} auf die Betätigungseinrichtung 114 aus.

Das Probenhandhabungsgerät 100 weist abgewinkelte Koppelstangen 124 und 126 auf. Die abgewinkelte Koppelstange 124 koppelt die Positionieranschläge 108 mit der Kupplungsscheibe 118. Hierbei bewerkstelligt ein Verbindungselement 128 eine gelenkige Verbindung zwischen der Linearführungseinrichtung 110 und einem ersten geradlinigen Abschnitt 130 der abgewinkelten Koppelstange 124. Ein zweiter geradliniger Abschnitt 132 der Koppelstange 124 ist über ein Verbindungselement 134 mit der Kupplungsscheibe 118 gelenkig verbunden. Die abgewinkelte Koppelstange 126 koppelt die Positionieranschläge 106 mit der Kupplungsscheibe 118. Hierbei bewerkstelligt ein Verbindungselement 142 eine gelenkige Verbindung zwischen der Linearführungseinrichtung 112 und einem ersten geradlinigen Abschnitt 140 der abgewinkelten Koppelstange 126. Ein zweiter geradliniger Abschnitt 138 der Koppelstange 126 ist über ein Verbindungselement 136 mit der Kupplungsscheibe 118 gelenkig verbunden.

Eine abgewinkelte Koppelstange 144 aus einem ersten geradlinigen Abschnitt 188 und einem zweiten geradlinigen Abschnitt 189 verbindet die Betätigungseinrichtung 114, bzw. eine Linearführungseinrichtung 146 der Betätigungseinrichtung 114, mit der drehbar gelagerten Kupplungsscheibe 118. Hierfür enthält die Koppelstange 144 ein Verbindungselement 148 zum gelenkigen Verbinden der Kopplungsstange 144 mit der Linearführungseinrichtung 146. Ein Verbindungselement 150 verbindet die Kopplungsstange 144 gelenkig mit der Kupplungsscheibe 118.

Die Koppelstangen 124, 126 sind einseitig mit der Kupplungsscheibe 118 gelenkig verbunden. An der jeweils anderen Seite sind die Koppelstangen 124, 126 gelenkig mit linear geführten Schiebern 172 bzw. 174 verbunden. Auf den zwei Schiebern 172, 174 sind jeweils die als Positionierstifte ausgeführten Positionieranschläge 106, 108 angebracht. Auch die Betätigungseinrichtung 114 ist als ein solcher Schieber ausgestaltet.

In dem Ausführungsbeispiel gemäß Fig. 1 sind die Koppelstangen 124, 126 und 144 als dünne aber starre Metallstreifen ausgeführt, die alle in derselben Ebene angeordnet sind, nämlich auf einer oberen kreisförmigen Deckfläche des dünnen scheibenförmigen Metallkörpers, welcher eine Koppelfläche der Kupplungsscheibe 118 bildet. Dadurch ist eine sehr platzsparende Flachbauweise ermöglicht.

Eine orbitale Schüttelbewegung kann durch eine exzentrisch aufgehängte Welle hervorgerufen werden, die in Fig. 1 nicht gezeigt ist und die in den Grundträger 102 integriert ist. Eine Rotationsachse, um welche die exzentrisch aufgehängte Welle rotiert, ist somit gegenüber einem Massenschwerpunkt bzw. einer Schwerpunktachse dieser Welle versetzt. Diese Welle kann in einem oberen Endbereich mit einem Gummiring versehen sein und kann mit diesem Endbereich in eine zentrale Öffnung 198 im Inneren der Kupplungsscheibe 118 eingreifen. Auf diese Weise kann eine Orbitalbewegung auf die Kopplungsscheibe 118 und schließlich auf das Trägerelement 104 mit der eingespannten Mikrotiterplatte übertragen werden, womit die orbitale Schüttelbewegung generiert wird.

Während einer solchen orbitalen Schüttelbewegung (hervorgerufen durch eine nicht gezeigte und in den Grundträger 102 integrierte Schütteleinrichtung), die im geschlossenen Zustand des Mechanismus ausgeführt wird, wirkt auf die Mikrotiterplatte eine Zentrifugalkraft, deren Wirkrichtung umläuft (siehe Bezugszeichen M_{d} in Fig. 2). Da jedoch die Positionieranschläge 106, 108 auf den Schiebern 172, 174 linear geführt sind, ergibt sich nur ein möglicher Freiheitsgrad der Bewegung aufgrund der Zentrifugalkraft F_{Z}, der in Fig. 2 (geschlossener Zustand) durch die eingezeichneten Pfeile dargestellt ist. Die Zentrifugalkraft erzeugt gegenüber der Kupplungsscheibe 118 das schematisch dargestellte Drehmoment M_{d}, aus dem eine auf die Koppelstange 144 einwirkende Kraft F_{A} resultiert. Das Drehmoment M_{d} und die Kraft F_{A} werden maximal, wenn die umlaufende Wirkrichtung der Zentrifugalkraft und die mögliche Bewegungsrichtung der Linearführungen der Schieber 172, 174 übereinstimmen.

Wie in Fig. 2 dargestellt, wirkt die Kraft F_{A}, die über Koppelstange 144 auf den Schieber 176 übertragen wird, jedoch in der geschlossenen Stellung des Mechanismus geschlossen und blockiert. Vorteilhaft ist die Tatsache, dass eine geringe Kraft an der als Schieber ausgestalteten Betätigungseinrichtung 114 ausreicht, um die Schieber 172, 174 zu bewegen, jedoch umgekehrt im geschlossenen Zustand eine Bewegung der als Schieber ausgestalteten Betätigungseinrichtung 114 durch Krafteinwirkung an den Schiebern 172, 174 nicht zu erzeugen ist.

Anders ausgedrückt sind die Betätigungseinrichtung 114 und die Kupplungsscheibe 118 derart gekoppelt, dass in dem die Probenträgerplatte in Eingriff nehmenden Betriebszustand gemäß Fig. 2 die Kupplungsscheibe 118 eine Schüttelkraft der Probenträgerplatte derart auf die Betätigungseinrichtung 114 überträgt, dass die Betätigungseinrichtung 114 trotz Einwirkens der übertragenen Probenträgerplattenkraft gegenüber dem Trägerelement 104 in einer Ruhestellung verbleibt. Dies ist insbesondere durch die relativ zu einer
Linearverschiebungsrichtung 186 der Linearführungseinrichtung 146 senkrechte Einkopplung der Schüttelkraft F_{A} ermöglicht.

Eine Erstreckungsrichtung der Koppelstange 124 kann parallel oder im Wesentlichen parallel (insbesondere in einem Winkelbereich von ±20°) zu einer Linearverschieberichtung des Schiebers 172 in der Linearführungseinrichtung 110 sein. Eine Erstreckungsrichtung der Koppelstange 126 kann parallel oder im Wesentlichen parallel (insbesondere in einem Winkelbereich von ±20°) zu einer Linearverschieberichtung des Schiebers 174 in der Linearführungseinrichtung 112 sein. Dies führt dazu, dass die Koppelstangen 124, 126 Kräfte effizient auf die Positionieranschläge 106, 108 einkoppeln können. Eine Erstreckungsrichtung der Koppelstange 144 kann dagegen senkrecht oder im Wesentlichen senkrecht (insbesondere in einem Winkelbereich von ±20° um einen rechten Winkel) zu der Linearverschieberichtung 186 der als Schieber ausgebildeten Betätigungseinrichtung 114 in der Linearführungseinrichtung 146 sein. Dies führt vorteilhaft dazu, dass die Koppelstange 144 Kräfte nicht so auf die Betätigungseinrichtung 114 einkoppeln kann, dass diese dadurch merklich in Bewegung versetzt würde.

Oberseitige Bereiche von Kugeln 180 bilden die einzigen Aufnahmepunkte des Trägerelements 104, insbesondere in vertikaler oder z-Richtung. Die Kugeln 180 sind in Kugelaufnahmeöffnungen 182 des Grundträgers 102 aufgenommen und stehen über diese leicht hervor.

Die Verbindungskraft zwischen den Kugeln 180 und dem Trägerelement 104 wird einerseits durch die Gravitationskraft bewirkt, welche das Trägerelement 104 auf die Kugeln 180 drückt. Andererseits wirkt eine anziehende magnetische Kraft, die zwischen Magnetelemente aufweisenden Bolzen 184 der Trägerplatte 104 und entsprechenden Bolzenaufnahmeöffnungen in dem Grundträger 102 gebildet ist, in welchem ebenfalls Magnetelemente eingearbeitet sind. Die Magnetelemente an Enden der Bolzen 184 und in Bodenbereichen der Bolzenaufhahmeöffnungen des Grundträgers 102 ziehen einander an. Somit ist eine Befestigung des Trägerelements 102 an dem Grundträger 104 ohne Schrauben oder dergleichen möglich, einzig durch die anziehende Kraft der Magnetelemente und die Gravitationskraft. Selbst in einem schüttelnden Betriebszustand des Probenhandhabungsgeräts 100 ist somit eine Verbindung zwischen Trägerelement 104 und Grundträger 102 zu jedem Zeitpunkt sichergestellt.

Das Probenhandhabungsgerät 100 erlaubt es, beim Auf- und Zuschieben, das heißt beim Ein- oder Ausspannen einer Probenträgerplatte, einen Aufrichtungsfehler von weniger als 50 µm zu erreichen. Bei einem Anhalten des Probenhandhabungsgeräts 100 nach einer Schüttelbewegung kann die räumliche Position der Mikrotiterplatte mit einer Genauigkeit von besser als 50 µm definiert werden, so dass eine sehr genaue Nulllage erreicht werden kann. Insgesamt ist, wenn man die obigen Fehler zusammenzählt, die Genauigkeit der Positionierung besser als 0,1 mm, was insbesondere für ein Zusammenwirken mit einer Pipettieranlage oder einer Detektionseinrichtung, zum Beispiel einer optischen Detektionseinrichtung, maßgeblich ist. Weitere Möglichkeiten der Detektion sind möglich, zum Beispiel optisches Auslesen mittels einer rasterartig geführten hochauflösenden Kamera. Objektiv-Systeme, Photodioden, Photomultiplier oder ähnliches können ebenfalls vorgesehen werden. Eine Pipettieranlage kann eine matrixförmige Anordnung von Keramiknadeln enthalten, die in einzelne Wells einer Mikrotiterplatte eintauchen sollen. Infolge der zunehmenden Miniaturisierung steigt die Gefahr, dass eine fehlerhafte Positionierung einer Mikrotiterplatte in dem Probenhandhabungsgerät 100 zu einem Abbrechen solcher Nadeln und somit zu einem hohen Schaden führen kann. Mit der hochgenauen Positionierung gemäß Ausführungsbeispiel der Erfindung kann eine solche unerwünschte Schädigung von Pipettieranlagen zuverlässig vermieden werden, Ausschuss reduziert werden und die Zuverlässigkeit eines biochemischen Präparationsprozesses verbessert werden.

Das System ist universeller einsetzbar als zum Positionieren und Schütteln von Probenträgerplatten. Möglich sind zum Beispiel auch das hochgenaue Positionieren von rasterartig angeordneten Vorratsbehältnissen, bestückt mit Einmalpipettierspitzen oder -nadeln oder ähnlichen Hilfsmitteln. Das bedeutet, dass der Roboterkopf zum Beispiel 384 Pipettierspitzen hochgenau einzeln oder gemeinsam aufnehmen kann.

**Fig. 3** zeigt eine dreidimensionale Ansicht einer Anordnung 300 gemäß einem Ausführungsbeispiel der Erfindung. Anordnung 300 zeigt ein Trägerelement 104 mit aufgenommener Mikrotiterplatte 302, aber ohne einen Grundkörper 102, auf den das Trägerelement 104 aufgesetzt sein kann.

Bei diesem Ausführungsbeispiel ist die Mikrotiterplatte 302 auf dem Träger 104 aufgesetzt und seitlich fest gehalten. Dies wird gemäß dem Ausführungsbeispiel von Fig. 3 mittels der Anschlagelemente 106 bzw. 108 in gegenüberliegenden Eckbereichen des Trägerelements 104 realisiert, die sich punktuell an Seitenwände eines umlaufenden unterseitigen Stegs 330 der Mikrotiterplatte 302 anschmiegen. Die Mikrotiterplatte 302 enthält eine Mehrzahl von matrixförmig angeordneten Wells oder Probenaufnahmenäpfchen 312. Die Mikrotiterplatte 302 kann von einem Roboterarm oder manuell durch einen Benutzer eingesetzt werden.

Die Positionieranschläge 106, 108 gemäß Fig. 3 sind als konische Stifte mit einer Mehrzahl von daran angebrachten Ringen 320, 322 unterschiedlichen Außendurchmessers gebildet. Jede andere Anzahl von Ringen ist möglich. Wie in dem linken unteren Bereich von Fig. 3 am besten zu erkennen ist, hat ein unterer Ring 320 einen kleineren Außendurchmesser als ein oberer Ring 322. Indem die Ringe 320, 322 von unten nach oben unterschiedliche Größen haben, gemäß Fig. 3 aufsteigende Größen, können Mikrotiterplatten mit unterschiedlichen Außendurchmessern von Stegen 330 flexibel in die Anordnung 300 eingespannt werden.

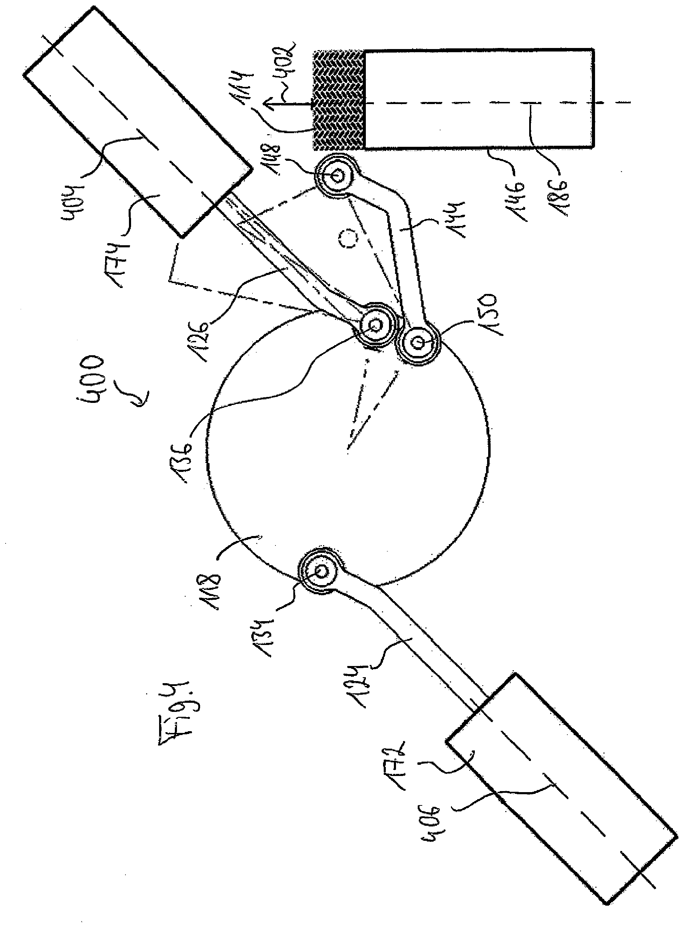

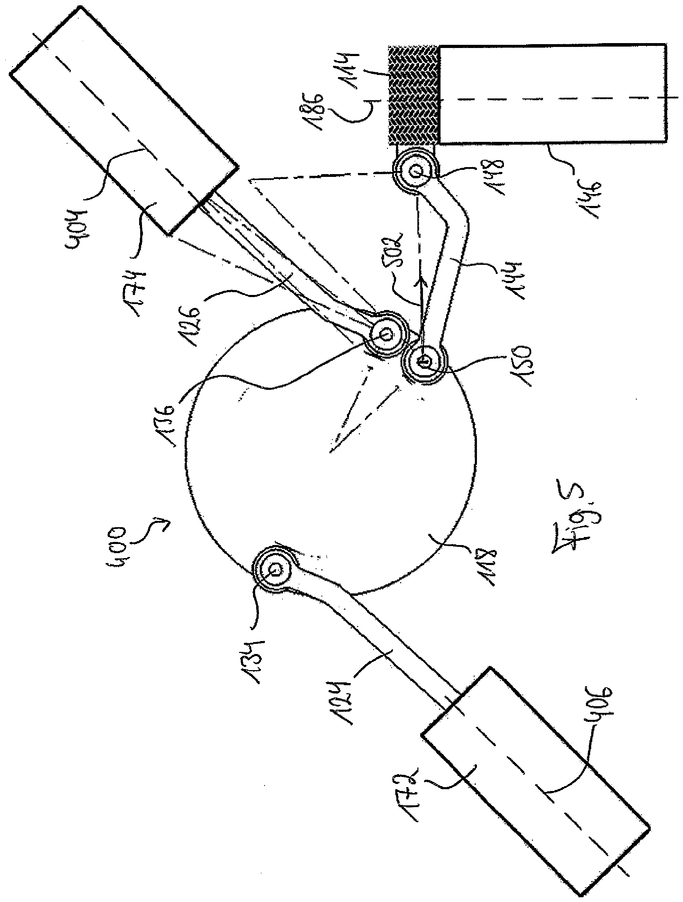

**Fig. 4** und **Fig. 5** zeigen in Draufsicht Prinzipdarstellungen einer Positioniereinrichtung 400 gemäß einem exemplarischen Ausführungsbeispiel der Erfindung. Die Anordnung kann ähnlich wie in Fig. 1 gezeigt ausgestaltet sein, so dass in Fig. 4 und in Fig. 5 nur die für die Erläuterung des Funktionsprinzips einer Bewegungssperre zum Unterbinden einer Bewegung einer Betätigungseinrichtung 114 infolge eines Schüttelns einer Probenträgerplatte relevanten Komponenten dargestellt sind.

In einem in Fig. 4 gezeigten Betriebszustand wird durch Betätigung des Betätigungselements 114 eine nicht gezeigte Probenträgerplatte zwischen nicht gezeigten Positionieranschlägen eingelegt. Wird das Betätigungselement 114 in Richtung eines Pfeils 402 gemäß Fig. 4 nach oben geschoben, wird dadurch die Koppelstange 144 gekippt, was zu einer Verdrehung der Kraftübertragungsscheibe 118 führt. Dadurch werden auch die Koppelstangen 124, 126 verdreht, womit die Schieber 172, 174 entlang Linearverschieberichtungen 404, 406 verschoben und folglich Positionieranschläge nach außen gedrückt werden.

In einem in Fig. 5 gezeigten Betriebszustand ist die Probenträgerplatte bereits zwischen den Positionieranschlägen eingespannt und wird mittels einer Schütteleinrichtung (nicht gezeigt) geschüttelt, ohne dass die Schüttelkraft die Betätigungseinrichtung 114 unerwünscht in Bewegung setzt. Dies erfolgt unter Einsatz eines Kraftübertragungsmechanismus, der im Weiteren beschrieben wird.

Das Betätigungselement 114 und die als Kraftübertragungselement fungierende Kraftübertragungsscheibe 118 sind mittels der Kopplungsstange 144 derart gekoppelt, dass eine Schüttelkraft der Schütteleinrichtung derart auf das Betätigungselement 114 übertragen wird, dass das Betätigungselement 114 trotz Einwirkens der übertragenen Schüttelkraft in der Ruhestellung gemäß Fig. 5 verbleibt, sich also nicht gemäß Fig. 5 nach oben oder unten bewegt. Das Betätigungselement 114 und die Kraftübertragungsscheibe 118 sind mittels der Koppelstange 144 derart gekoppelt, dass in dem Betriebszustand gemäß Fig. 5 die Koppelstange 144 die Schüttelkraft, vergleiche Bezugszeichen 502, senkrecht zu einer Verschieberichtung 186 des Betätigungselements 114 einkoppelt.

Bei einer orthogonalen Stellung zwischen der Koppelstange 144 und der Verschieberichtung 186 gemäß Fig. 5 kann keine Schüttelkraftkomponente zu einer Bewegung der Betätigungseinrichtung 114 führen, so dass diese Art der Kraftübertragung die Bewegung vorteilhaft sperrt. In der anderen Kraftübertragungsrichtung, das heißt von der Betätigungseinrichtung 114 zu den Schiebern 172, 174 kann dagegen eine zu einer Bewegung führende Kraftübertragung erfolgen, da die Koppelstangen 124, 126 nicht-senkrecht (sondern sogar annähernd parallel) zu den Linearverschieberichtungen 404, 406 stehen.

Im geschlossenen Zustand ist gemäß Fig. 5 ein Winkel von fast 90° zwischen eingekoppelter Schüttelkraft 502 und Verschieberichtung 186 erreichbar. Das System ist dann so gut verklemmt, dass die Federn 120 auch weggelassen werden könnten. Das System ist fast nicht über die Ecken aufschiebbar und hält auch sehr hohen Schütteldrehzahlen zuverlässig stand.

Im Weiteren wird Bezug nehmend auf Fig. 6 bis Fig. 8 eine Positioniereinrichtung 600 gemäß einem anderen exemplarischen Ausführungsbeispiel der Erfindung beschrieben.

In dem in **Fig. 6** gezeigten Betriebszustand ist das Trägerelement 104 mit den darin integrierten funktionalen Komponenten auf den Grundträger 102 aufgesetzt.

Ähnlich wie Fig. 1 und Fig. 2 zeigt **Fig. 7** eine räumliche Darstellung der Positioniereinrichtung 600, nachdem die Trägerplatte 104 abgenommen worden ist. Zum besseren Verständnis des Zusammenwirkens der einzelnen Komponenten der Positioniereinrichtung 600 ist jedoch eine Anzahl von Komponenten, die fest mit dieser Trägerplatte 104 verbunden sind, in Fig. 7 eingezeichnet.

Bei der Positioniereinrichtung 600 ist ein Paar von Schraubenfedern 120 vorgesehen, die parallel zueinander zwischen einem Eckbereich des Trägerelements 104 und einem Abschnitt der Betätigungseinrichtung 114 angeordnet sind. Bei einer Nullstellung der Betätigungseinrichtung 114, die einem in Eingriff nehmenden Betriebszustand einer nicht gezeigten Mikrotiterplatte entspricht, sind die Schraubenfedern 120 in einem unbelasteten Zustand. Wird dagegen zum Beispiel durch die Muskelkraft eines Benutzers oder durch eine elektrische Kraft eines Roboters die Betätigungseinrichtung 114 in Richtung der Positionieranschläge 106 verschoben, so wird durch das Vorsehen der beiden parallelen Federn 120 eine rücktreibende Kraft ausgeübt, welche die Tendenz hat, die Betätigungseinrichtung 114 in die Nullstellung zurück zu bringen.

Die Positionieranschläge 106, 108, die Betätigungseinrichtung 114 sowie das Kraftübertragungselement 118 sind an dem in Fig. 7 abgenommenen Trägerelement 104 angeordnet und sind gemeinsam gegenüber dem Grundträger 102 bewegbar.

Fig. 7 zeigt ferner, dass in einem Grundkörper 102 eine exzentrisch montierte Welle 700 angeordnet ist. Diese greift in die Aussparung 198 in der Kupplungsscheibe 118 ein. Wenn die Exzenterwelle 700 zum Beispiel von einem Elektromotor angetrieben wird, führt dies zu einer Orbitalbewegung der Exzenterwelle 700, was zu einer Orbitalbewegung der Kupplungsscheibe 118 führt. Dies bewirkt eine Orbitalbewegung der Trägerplatte 104 und der Positionieranschläge 106, 108.

An den Grundkörper 102 sind um die Kupplungsscheibe 118 herum angeordnet drei hohlzylindrische Aussparungen 702 gebildet, in die ein jeweiliger Bolzen 704 angreift, der an einer Unterseite der Trägerplatte 104 verschraubt ist. An einer tiefsten Stelle der Aussparungen 702 sind Permanentmagneten angeordnet, die eine anziehende Kraft auf korrespondierende Permanentmagneten ausüben, die an einer Unterseite der Bolzen 704 angeordnet sind (nicht gezeigt). Dadurch ist eine ausschließlich magnetische Befestigung zwischen dem Trägerelement 104 und dem Grundträger 102 bewerkstelligt. Zwischen den anziehenden Magneten ist jeweils ein Luftspalt gebildet.

Darüber hinaus ist in den Grundkörper 102 eine Mehrzahl von Kugelaufnahmen 706 gebildet, in die jeweils eine Kugel 708 eingeführt ist, die aus diesen Kugelaufnahmen 706 nach oben hervorstehen. An der Unterseite des abgenommenen Trägerelements 104 sind Plättchen 710 aus einem reibungsarmen Material gebildet. Darunter wird verstanden, dass bei einer Bewegung der Kugel 708 in den Kugelaufnahmen 706 nur eine äußerst geringe Reibungskraft zwischen den Plättchen 710 und den Kugeln 708 auftritt. Obwohl dies in Fig. 7 nicht gezeigt ist, kann an einer tiefsten Stelle in den Kugelaufnahmen 706 ebenfalls ein solches Plättchen 710 vorgesehen sein, um auch auf einer Unterseite der Kugeln 708 ein reibungsarmes Gleiten zu ermöglichen. Die obersten Punkte der Kugeln 708 bilden die einzigen direkten Auflagepunkte des Trägerelements 102 auf dem Grundkörper 102. Die Scheiben oder Plättchen 710 können aus einem Keramikmaterial gebildet sein.

Ferner ist in Fig. 7 anschaulich ein (zwischen zwei oder mehr Schalterstellungen) bewegbares Maschinenelement, zum Beispiel ein schwenkbarer Servoarm 712, gezeigt, das durch einen zum Beispiel in den Grundkörper 102 integrierten Elektromotor angetrieben werden kann und selektiv gegen einen Stift 176 an dem Betätigungselement 114 drücken kann, um dieses zu verschieben. Damit ist die Positioniereinrichtung 600 zwischen dem die Probenträgerplatte freigebenden und dem die Probenträgerplatte in Eingriff nehmenden Betriebszustand maschinell schaltbar. Alternativ kann die Positioniereinrichtung 600 durch einen menschlichen Benutzer betrieben werden, der hierfür den Aktuatorhebel 195 entlang einer Seitenkante der Positioniereinrichtung 600 verschiebt.

Alternativ zu dem Servosystem kann ein Linearantrieb, zum Beispiel Spindelantrieb oder Zahnriemenantrieb mit einem Langloch vorgesehen sein, das so groß ist, dass ein Betätigungsangriffspunkt, zum Beispiel ein zylindrischer Stift des Betätigungselements im Schüttelbetrieb mitgeschüttelt werden kann. In diesem Langloch kann auch eine Aktuatorbewegung ausgeübt werden.

In Fig. 7 ist auch ein Ausgleichsgewicht 730 gezeigt, welches Kräfte ausgleichen soll, die durch die exzentrische Aufhängung der Exzenterwelle 700 generiert werden können. Das Ausgleichsgewicht 730 ist als annähernd halbhohlzylinderförmige Platte ausgebildet. Zusätzlich zu dem Ausgleichsgewicht 730 kann ein weiteres, in Fig. 7 nicht zu erkennendes weiteres Ausgleichsgewicht, vorgesehen sein, das einen noch feineren Ausgleich ermöglicht.

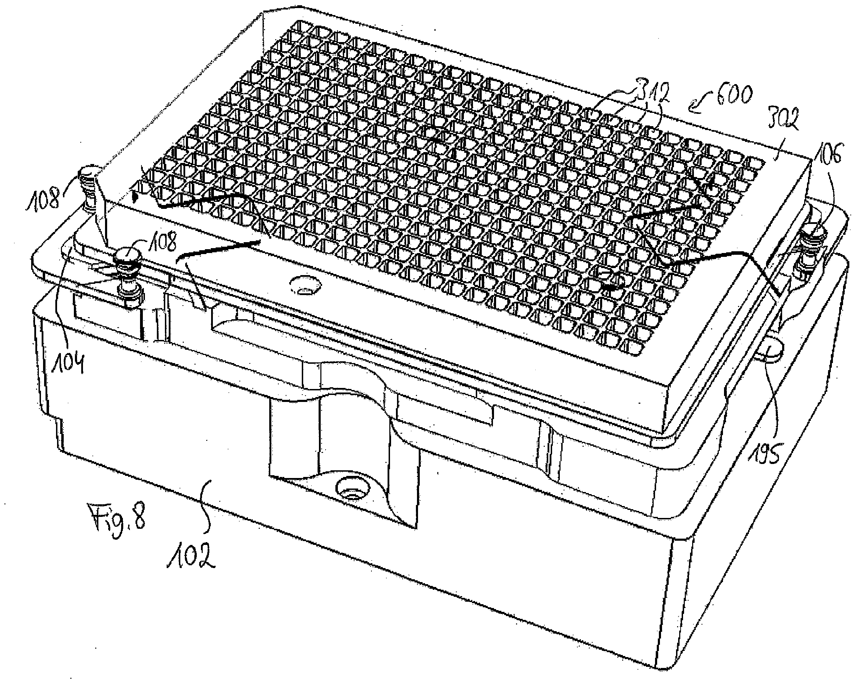

**Fig. 8** zeigt die Positioniereinrichtung 600 in einem Betriebszustand, in dem eine Mikrotiterplatte 302 mit einer Mehrzahl von Wells 312 zwischen den gegenüberliegenden Positionieranschlägen 106, 108 eingespannt ist.

Im Unterschied zu den Positionieranschlägen 106, 108 gemäß Fig. 3 sind die Positionieranschläge 106, 108 gemäß Fig. 8 als Edelstahlstifte mit drei daran integral geformten Stufen unterschiedlichen Außendurchmessers gebildet. Diese integral geformten Stufen unterschiedlichen Außendurchmessers erfüllen eine ähnliche Funktion wie die Gummiringe 320, 322, 324 der Positionieranschläge 106, 108 gemäß Fig. 3, sind aber fertigungstechnisch besonders günstig herstellbar.

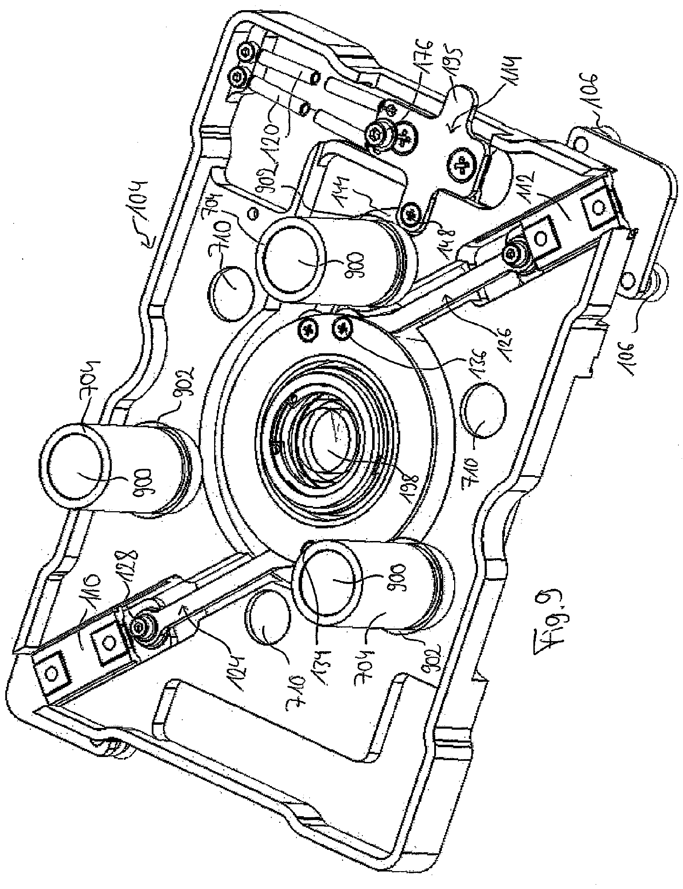

**Fig. 9** zeigt eine Ansicht des Trägerelements 104 gemäß dem Ausführungsbeispiel von Fig. 6 bis Fig. 8 von unten. In Fig. 9 sind auch die Permanentmagnetelemente an der Unterseite der Bolzen 704 gezeigt und mit Bezugszeichen 900 versehen.

Bezugszeichen 902 bezeichnet Resonanzdämpfelemente in der Form von Gummiringen, die um eine äußere Umfangsfläche der Bolzen 704 aufgesteckt und gegebenenfalls dort (zum Beispiel mittels Klebens) befestigt sind. Unter unerwünschten Bedingungen kann es dazu kommen, dass eine Schüttelvorrichtung mit der Positioniereinrichtung 600 in den Bereich einer Resonanzfrequenz kommt. Dann schwingt die gesamte Positioniereinrichtung 600 unerwünscht auf dieser Frequenz, die zum Beispiel bei 1500 Umdrehungen/min liegen kann. Dies kann zu einer unerwünschten Bewegung der gesamten Vorrichtung auf einer Unterlage führen. Um dies zu vermeiden, sind die Resonanzdämpfelemente 902 vorgesehen. Diese sind normalerweise in einem Abstand von den umgebenden Seitenwänden der Bolzenaufhahmeöffnungen 702 angeordnet. Kommt es allerdings zu einer Resonanz, so werden die Resonanzdämpfelemente 902 gegen eine solche Seitenwand gedrückt, was zu einer Dämpfung dieser Resonanzschwingung führt. Dadurch kann das System aus der Resonanz herausgeführt werden.

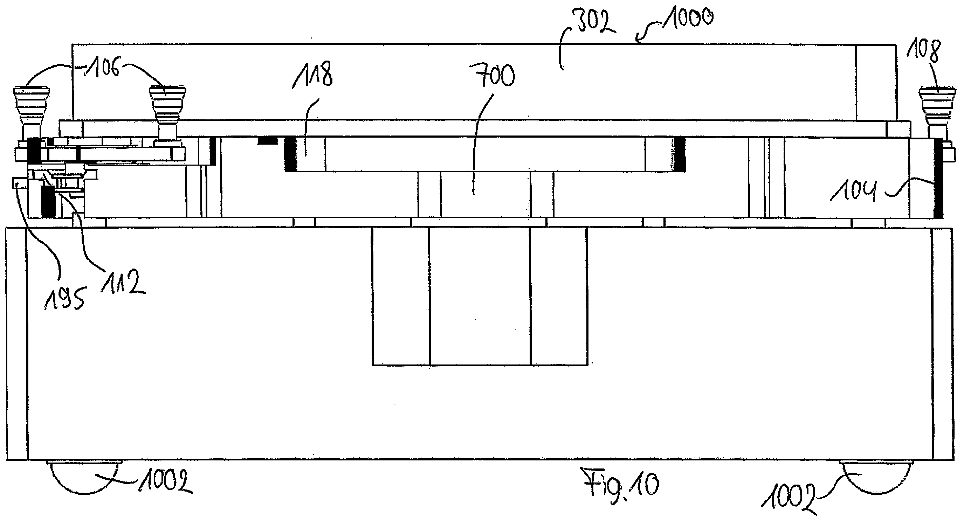

Wie die in **Fig. 10** gezeigte Querschnittsansicht 1000 einer Positioniereinrichtung gemäß einem exemplarischen Ausführungsbeispiel der Erfindung zeigt, können am Boden des Grundträgers 102 Dämpfungselemente 1002 in Form von Gumminoppen oder dergleichen vorgesehen sein.

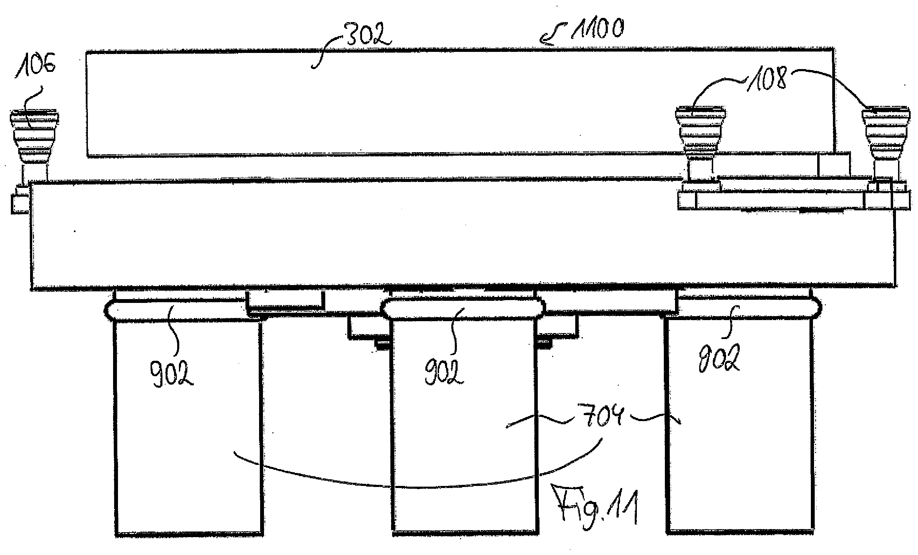

Besonders gut zu erkennen in einer Querschnittsansicht 1100 gemäß Fig. 11 ist die Geometrie der gefasten einstoffigen Positionieranschläge 106, 108 sowie das Anbringen der Resonanzdämpfelemente 902 an den Bolzen 704.

Im Weiteren wird bezugnehmend auf **Fig. 12** und **Fig. 13** ein Probenhandhabungsgerät 1200 gemäß einem exemplarischen Ausführungsbeispiel der Erfindung beschrieben. Der Betriebszustand von Fig. 12 entspricht jenem von Fig. 1, und der Betriebszustand von Fig. 13 entspricht jenem von Fig. 2. Im Weiteren werden im Wesentlichen nur die Unterschiede des Probenhandhabungsgeräts 1200 gegenüber dem Probenhandhabungsgerät 100 beschrieben.

Das Probenhandhabungsgerät 1200 enthält eine starre, schwenkbar gelagerte Koppelstange 1202, mittels welcher die Betätigungseinrichtung 114 mit dem Kraftübertragungselement 118 gekoppelt ist. Die Koppelstange 1202 weist einen Längeneinstellmechanismus zum Einstellen einer Länge L (siehe Fig. 13) der Koppelstange 1202 auf. Der Längeneinstellmechanismus ist durch ein erstes Koppelstangenteil 1204 und durch ein zweites Koppelstangenteil 1206 gebildet, wobei das erste Koppelstangenteil 1204 und das zweite Koppelstangenteil 1206 zum Einstellen der Länge der Koppelstange 1202 aneinander mit einstellbarer Überlappung B befestigbar sind. Durch Variation von B ist L variierbar.

An der Koppelstange 1202, genauer gesagt an dem zweiten Koppelstangenteil 1206, ist ein mitschwenkbarer erster Magnet 1208 fixiert. Ein zweiter Magnet 1210 ist an dem Trägerelement 104 fest angebracht und bewirkt gemeinsam mit dem ersten Magneten 1208 eine anziehende Kraft (anders ausgedrückt ziehen sich die beiden Magneten 1208, 1210 an). Der erste Magnet 1208 und der zweite Magnet 1210 sind derart angeordnet, dass im die Funktionseinrichtung in Eingriff nehmenden Betriebszustand gemäß Fig. 13 ein mittlerer Abstand zwischen dem ersten Magnet 1208 und dem zweiten Magnet 1210 kleiner ist als im die Funktionseinrichtung freigebenden Betriebszustand gemäß Fig. 12. Der erste Magnet 1208 und der zweite Magnet 1210 üben gemäß Fig. 13 die anziehende Kraft vertikal und somit in einer Richtung parallel zu einer Verschieberichtung der Betätigungseinrichtung 114 aus. Gleichzeitig üben der erste Magnet 1208 und der zweite Magnet 1210 gemäß Fig. 13 die anziehende Kraft senkrecht zu einer im Wesentlichen horizontalen Erstreckungsrichtung der Koppelstange 1202 aus.

Fig. 12 zeigt somit den Verriegelungsmechanismus geöffnet, die Positionierecken 106, 108 (oder Pins) sind ausgefahren. Fig. 13 zeigt dagegen den Verriegelungsmechanismus geschlossen, die Positionierecken 106, 108 sind eingefahren. Das Magnetpaar 1208, 1210 wirkt anziehend, die Koppelstange 1202 ist in 90° Stellung zur Betätigungseinrichtung 114 (Schieber).

Um die Wirkung des Mechanismus weiter zu verbessern, ist in Fig. 12 und Fig. 13 a) die Koppelstange 1202 zweigeteilt und mit einem Justierelement (Schraubenverbindung) versehen, Ferner ist b) das Magnetpaar 1208, 1210 eingebracht.

### Dies hat unter anderem die folgenden Vorteile:

Gemäß a) ist die Koppelstange 1202 zweigeteilt. In dem zweiten Koppelstangenteil 1206 sind zwei Gewindebohrungen und zwei Feststellschrauben eingebracht. Das erste Koppelstangenteil 1204 ist mit einem schmalen Schlitz in Breite des Schraubengewindes versehen. Somit können nun über die Feststellung der zwei Schrauben a1) beide Koppelstangenteile 1204, 1206 zu der starren Koppelstange 1202 verbunden werden bzw. a2) eine Verschiebung und Justierung vorgenommen werden. Die Justierung dient dem Ziel, bei eingefahrenen Pins - in Abhängigkeit von den toleranzbehafteten Außenabmaßen des zu klemmenden Probenträgers - eine möglichst ideale 90° Stellung zwischen Koppelstange 1202 und Verschiebeelement 114 zu erzielen. Übliche Probenträger, meist Mikrotiterplatten im ANSI SBS Format, sind in der Regel toleranzbehaftet und weisen unterschiedliche umlaufende Randgeometrien auf. Ist der Probenträger für eine konkrete Anwendung vorher bekannt, so kann hiermit ein idealer Klemmzustand mit 90° Stellung zwischen Koppelstange 1202 und Verschiebeelement 114 justiert und erreicht werden.

Bezugnehmend auf b) verstärkt das Magnetpaar 1208, 1210 den positiven Effekt von a) im geschlossenen Zustand. Eine vorteilhafte Wirkung ist die Erreichung der idealen 90° Stellung, welche aber auf Grund der toleranzbehafteten Außenabmaße der zu verwendenden Probenträger nie ganz erreicht werden kann. Das Magnetpaar 1208, 1210, das nun im geschlossenen Zustand anziehend wirkt, unterstützt die Einnahme der gewünschten 90° Positionsstellung. Das Magnetpaar 1208, 1210 wirkt auch bei hohen Schüttelbewegungen, wobei auf die Pins durch den Probenträger höhere Kräfte mit Tendenz zu einer unerwünschten Öffnung einwirken, äußerst vorteilhaft und unterstützt die Einbehaltung der nahezu idealen 90° Stellung.

Soll der Mechanismus dann wieder geöffnet werden, so ist das Verschiebeelement 114 manuell oder per Antrieb zu verstellen, wobei nun auch zusätzlich die Magnetkraft überwunden werden muss. Mit geeigneter Wahl der Magnetfeldstärke kann hier ein guter technischer Kompromiss eingenommen werden. Es ist in einem Ausführungsbeispiel auch möglich, einen oder beide der Magnete 1208, 1210 als Elektromagneten auszugestalten, so dass durch Abschalten einer Anregungsspannung im in Eingriff nehmenden Zustand die dann unerwünschte Anziehungskraft der Magneten abgeschaltet oder sogar in eine abstoßende Kraft umgewandelt werden kann.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung zum Positionieren einer Funktionseinrichtung, wobei die Vorrichtung aufweist:
einen Grundkörper (102);
ein auf dem Grundkörper (102) anordbares Trägerelement (104) zum Aufnehmen der Funktionseinrichtung; wobei die Funktionseinrichtung ein Probenbehälter, eine Trägerplatte oder ein rasterartig angeordnetes Vorrats- oder Aufhahmebehältnis ist;
Positionieranschläge (106, 108), die zum Einklemmen der Funktionseinrichtung verschiebbar gelagert sind;
eine Betätigungseinrichtung (114), die derart eingerichtet ist, dass mittels Betätigens der Betätigungseinrichtung (114) die Positionieranschläge (106, 108) zwischen einem die Funktionseinrichtung in Eingriff nehmenden Betriebszustand und einem die Funktionseinrichtung freigebenden Betriebszustand überführbar sind;
ein Kraftübertragungselement, das zum Übertragen einer Betätigungskraft von der Betätigungseinrichtung (114) auf die Positionieranschläge (106, 108) eingerichtet ist;
wobei das Kraftübertragungselement als drehbar gelagerte Kupplungsscheibe (118) ausgebildet ist,
eine schwenkbar gelagerte Koppelstange (144), mittels welcher die Betätigungseinrichtung (114) mit der Kupplungsscheibe (118) gekoppelt ist,
eine Linearführungseinrichtung (146) zum Vorgeben einer Linearverschieberichtung der Betätigungseinrichtung (114), entlang welcher Linearverschieberichtung die Betätigungseinrichtung (114) ausschließlich verschiebbar ist,
wobei die Koppelstange (144) mit der drehbar gelagerten Kupplungsscheibe (118) gelenkig verbunden und mit der Betätigungseinrichtung (114) mittels der Linearführungseinrichtung (146) gelenkig verbunden ist,
wobei in dem die Funktionseinrichtung in Eingriff nehmenden Betriebszustand die Koppelstange (144) derart orientiert ist, dass eine Funktionseinrichtungskraft der Funktionseinrichtung senkrecht zu der Linearverschieberichtung wirkend auf die Betätigungseinrichtung (114) übertragen wird und die Betätigungseinrichtung (114) und die Kupplungsscheibe (118) mittels der Koppelstange (144) derart gekoppelt sind, dass in dem die Funktionseinrichtung in Eingriff nehmenden Betriebszustand die Kupplungsscheibe (118) die Funktionseinrichtungskraft der Funktionseinrichtung derart auf die Betätigungseinrichtung (114) überträgt, dass die Betätigungseinrichtung (114) trotz Einwirkens der übertragenen Funktionseinrichtungskraft gegenüber dem Trägerelement (104) in einer Ruhestellung verbleibt,
wobei das Überführen der Positionieranschläge (106, 108) zwischen dem die Funktionseinrichtung in Eingriff nehmenden Betriebszustand und dem die Funktionseinrichtung freigebenden Betriebszustand mittels Schwenkens der schwenkbar gelagerten Koppelstange (144) bewerkstelligt ist,
wobei die Vorrichtung ferner aufweist:
bewegbar gelagerte weitere Koppelstangen (124, 126), mittels welcher die Positionieranschläge (106, 108) mit dem Kraftübertragungselement gekoppelt sind, wobei das Überführen der Positionieranschläge (106, 108) zwischen dem die Funktionseinrichtung in Eingriff nehmenden Betriebszustand und dem die Funktionseinrichtung freigebenden Betriebszustand mittels Bewegens, insbesondere mittels Schwenkens, der weiteren Koppelstangen (124, 126) bewerkstelligt ist; und
weitere Linearführungseinrichtungen (110, 112) zum Vorgeben von weiteren Linearverschieberichtungen der Positionieranschläge (106, 108), entlang welchen weiteren Linearverschieberichtungen die Positionieranschläge (106, 108) ausschließlich verschiebbar sind, wobei die weiteren Koppelstangen (124, 126) derart orientiert sind, dass die Betätigungskraft parallel zu den weiteren Linearverschieberichtungen wirkend auf die Positionieranschläge (106, 108) übertragen wird.

2. Vorrichtung nach Anspruch 1, wobei die Koppelstange (144) einen ersten geradlinig verlaufenden Abschnitt (188) und einen zweiten geradlinig verlaufenden Abschnitt (189) aufweist, wobei der erste geradlinig verlaufende Abschnitt (188) und der zweite geradlinig verlaufende Abschnitt (189) zueinander abgewinkelt sind.

3. Vorrichtung nach einem der Ansprüche 1 bis 2, wobei die Linearverschieberichtung parallel zu einer seitlichen Begrenzungskante des Trägerelements (104) verläuft.

4. Vorrichtung nach einem der Ansprüche 1 bis 3, wobei die Betätigungseinrichtung (114) an einem Seitenbereich des Trägerelements (104) zwischen zwei benachbarten Eckbereichen des Trägerelements (104) angeordnet ist.

5. Vorrichtung nach einem der Ansprüche 1 bis 4, ferner aufweisend eine in dem Grundträger angebrachte Schütteleinrichtung, die zum Schütteln der auf dem Trägerelement (104) montierten Funktionseinrichtung eingerichtet ist,
wobei die Betätigungseinrichtung (114) und das Kraftübertragungselement insbesondere derart gekoppelt sind, dass in dem die Funktionseinrichtung in Eingriff nehmenden Betriebszustand das Kraftübertragungselement eine von der Schütteleinrichtung bewirkte Schüttelkraft derart auf die Betätigungseinrichtung (114) überträgt, dass die Betätigungseinrichtung (114) trotz Einwirkens der übertragenen Schüttelkraft gegenüber dem Trägerelement (104) in einer Ruhestellung verbleibt,
wobei die Schütteleinrichtung zum Beaufschlagen der Funktionseinrichtung insbesondere mit einer Orbitalbewegung eingerichtet ist,
wobei die Betätigungseinrichtung (114) und das Kraftübertragungselement insbesondere derart mittels der Koppelstange (144) gekoppelt sind, dass in dem die Funktionseinrichtung in Eingriff nehmenden Betriebszustand die Koppelstange (144) eine Schüttelkraft senkrecht zu einer Verschieberichtung der Betätigungseinrichtung (114) überträgt.

6. Vorrichtung nach einem der Ansprüche 1 bis 5, aufweisend eine zwischen dem Trägerelement (104) und der Betätigungseinrichtung (114), insbesondere direkt zwischen dem Trägerelement (104) und der Betätigungseinrichtung (114), angeordnete Spanneinrichtung, die zum Übertragen einer Spannung, insbesondere einer Zugspannung, auf die Betätigungseinrichtung (114) eingerichtet ist,
wobei die Spanneinrichtung insbesondere eine Feder (120) aufweist, insbesondere eine Mehrzahl von parallel zueinander angeordnete Federn (120) aufweist,
wobei insbesondere ein Ende der Spanneinrichtung in einem Eckbereich des Trägerelements (104) angeordnet ist,
wobei insbesondere die Positionieranschläge (106, 108), die Betätigungseinrichtung (114) und das Kraftübertragungselement an dem Trägerelement (104) angeordnet sind und gemeinsam gegenüber dem Grundträger bewegbar sind,
wobei insbesondere an dem Grundkörper (102) eine exzentrisch montierte Welle angeordnet ist, die in eine Aussparung in dem Kraftübertragungselement des Trägerelements (104) eingreift und zum Ausüben einer orbitalen Schüttelbewegung des Grundkörpers (102) antreibbar ist,
wobei insbesondere an dem Grundkörper (102) mindestens eine Aussparung mit darin vorgesehenem Magnetelement gebildet ist, wobei mindestens ein Bolzen (184) des Trägerelements (104) mit daran vorgesehenem Magnetelement in der mindestens einen Aussparung aufnehmbar ist, wobei der Grundkörper (102) an dem Trägerelement (104) mittels einer anziehenden Kraft zwischen dem mindestens einen Magnetelement des Trägerelements (104) und dem mindestens einen Magnetelement des Grundkörpers (102) befestigbar ist,
wobei der mindestens eine Bolzen (184) insbesondere ein Resonanzdämpfelement, insbesondere einen elastischen Ring, aufweist, der im Falle einer resonanten Schüttelbewegung in der zugehörigen Aussparung gegen den Grundkörper (102) drückt, um die Vorrichtung außer Resonanz zu bringen,
wobei an dem Grundkörper (102) insbesondere eine Mehrzahl von Kugelaufnahmen (706) mit darin angeordneten Kugeln (708) gebildet ist, auf welchen Kugeln (708) das Trägerelement (104) aufliegt, wobei an dem Grundkörper (102) insbesondere ein bewegbares Maschinenelement angeordnet ist, wobei mittels maschinengesteuerten Bewegens, insbesondere Schwenkens, des bewegbaren Maschinenelements die Betätigungseinrichtung (114) betätigbar, insbesondere linear verschiebbar, ist,
wobei insbesondere die Positionieranschläge (106, 108) insbesondere ausschließlich an zwei gegenüberliegenden Eckbereichen des Trägerelements (104) angeordnet sind,
wobei die Positionieranschläge (106, 108) insbesondere mittels zweier Anschlagelemente mit zueinander senkrechten Anschlaglinien zum Anlegen an eine rechteckige Funktionseinrichtung gebildet sind,
wobei die Positionieranschläge (106, 108) insbesondere mittels zweier Anschlagelemente mit rundem Querschnitt zum Anlegen an die Funktionseinrichtung gebildet sind,
wobei die Anschlagelemente insbesondere als kreiszylindrische Stifte, als konische Stifte, als Stifte mit einem kreiszylindrischen Abschnitt und einem konischen Abschnitt, als Stifte mit einer Mehrzahl von daran angebrachten Ringen unterschiedlichen Außendurchmessers, oder als Stifte mit einer Mehrzahl von daran integral geformten Stufen unterschiedlichen Außendurchmessers gebildet sind,
wobei die Vorrichtung insbesondere eine elektrisch steuerbare Pipettiereinrichtung, die zum Pipettieren eines Fluids in Kavitäten der Funktionseinrichtung eingerichtet ist, aufweist.

7. Vorrichtung nach Anspruch 1, wobei die Koppelstange (144) und die weiteren Koppelstangen (124, 126) koplanar angeordnet sind.

8. Vorrichtung nach Anspruch 6 oder 7, wobei die Spanneinrichtung und/oder das Kraftübertragungselement und/oder die Betätigungseinrichtung (114) koplanar montiert sind.

9. Vorrichtung nach einem der Ansprüche 1 bis 8, aufweisend eine bewegbar, insbesondere schwenkbar, gelagerte Koppelstange (1202), mittels welcher die Betätigungseinrichtung (114) mit dem Kraftübertragungselement gekoppelt ist, wobei die Koppelstange (1202) einen Längeneinstellmechanismus zum Einstellen einer Länge der Koppelstange (1202) aufweist.

10. Vorrichtung nach einem der Ansprüche 1 bis 9, aufweisend:
eine bewegbar, insbesondere schwenkbar, gelagerte Koppelstange (1202), mittels welcher die Betätigungseinrichtung (114) mit dem Kraftübertragungselement gekoppelt ist, und die einen mitbewegbaren ersten Magneten (1208) enthält;
einen zweiten Magneten (1210), der an dem Trägerelement (104) oder an dem Grundkörper (102) angebracht ist und gemeinsam mit dem ersten Magneten (1208) eine anziehende Kraft bewirkt;
wobei der erste Magnet (1208) und der zweite Magnet (1210) derart angeordnet sind, dass im die Funktionseinrichtung in Eingriff nehmenden Betriebszustand ein Abstand zwischen dem ersten Magnet (1208) und dem zweiten Magnet (1210) kleiner ist als im die Funktionseinrichtung freigebenden Betriebszustand,
wobei insbesondere der erste Magnet (1208) und der zweite Magnet (1210) im die Funktionseinrichtung in Eingriff nehmenden Betriebszustand die anziehende Kraft in einer Richtung parallel zu einer Verschieberichtung der Betätigungseinrichtung (114) ausübt,
wobei insbesondere der erste Magnet (1208) und der zweite Magnet (1210) im die Funktionseinrichtung in Eingriff nehmenden Betriebszustand die anziehende Kraft in einer Richtung senkrecht zu einer Erstreckungsrichtung der Koppelstange (1202) ausübt.

11. Verfahren zum Positionieren einer Funktionseinrichtung, wobei das Verfahren aufweist:
Anordnen der Funktionseinrichtung zwischen an einem Trägerelement (104) verschiebbar gelagerten Positionieranschlägen (106, 108) in einem die Funktionseinrichtung freigebenden Betriebszustand zum Aufnehmen der Funktionseinrichtung auf dem Trägerelement (104), das auf einem Grundkörper (102) angeordnet ist; wobei die Funktionseinrichtung ein Probenbehälter, eine Trägerplatte oder ein rasterartig angeordnetes Vorrats- oder Aufnahmebehältnis ist;
Einspannen der Funktionseinrichtung zwischen den Positionieranschlägen (106, 108) mittels Betätigens einer Betätigungseinrichtung (114) zum Überführen der Positionieranschläge (106, 108) von dem die Funktionseinrichtung freigebenden Betriebszustand in einen die Funktionseinrichtung in Eingriff nehmenden Betriebszustand;
Übertragen einer Betätigungskraft von der Betätigungseinrichtung (114) auf die Positionieranschläge (106, 108) mittels eines Kraftübertragungselements, wobei das Kraftübertragungselement als drehbar gelagerte Kupplungsscheibe (118) ausgebildet ist,
wobei eine Linearführungseinrichtung (146) zum Vorgeben einer Linearverschieberichtung der Betätigungseinrichtung (114) bereitgestellt wird, entlang welcher Linearverschieberichtung die Betätigungseinrichtung (114) ausschließlich verschiebbar ist, und wobei eine Koppelstange (144) mit der drehbar gelagerten Kupplungsscheibe (118) gelenkig verbunden und mit der Betätigungseinrichtung (114) mittels der Linearführung gelenkig verbunden ist, und
Übertragen einer Funktionseinrichtungskraft der Funktionseinrichtung von der Kupplungsscheibe (118) auf die Betätigungseinrichtung (114) in dem die Funktionseinrichtung in Eingriff nehmenden Betriebszustand mittels der Koppelstange (144) derart, dass die Betätigungseinrichtung (114) trotz Einwirkens der übertragenen Funktionseinrichtungskraft gegenüber dem Trägerelement (104) in einer Ruhestellung verbleibt,
wobei in dem die Funktionseinrichtung in Eingriff nehmenden Betriebszustand die Koppelstange (144) derart orientiert ist, dass die Funktionseinrichtungskraft senkrecht zu der Linearverschieberichtung wirkend auf die Betätigungseinrichtung (114) übertragen wird,
wobei das Überführen der Positionieranschläge (106, 108) zwischen dem die Funktionseinrichtung in Eingriff nehmenden Betriebszustand und dem die Funktionseinrichtung freigebenden Betriebszustand mittels Schwenkens der Koppelstange (144) bewerkstelligt ist,
wobei bewegbar gelagerte weitere Koppelstangen (124, 126) vorgesehen sind, mittels welcher die Positionieranschläge (106, 108) mit dem Kraftübertragungselement gekoppelt sind, wobei das Überführen der Positionieranschläge (106, 108) zwischen dem die Funktionseinrichtung in Eingriff nehmenden Betriebszustand und dem die Funktionseinrichtung freigebenden Betriebszustand mittels Bewegens, insbesondere mittels Schwenkens, der weiteren Koppelstangen (124, 126) bewerkstelligt ist; und
wobei weitere Linearführungseinrichtungen (110, 112) zum Vorgeben von weiteren Linearverschieberichtungen der Positionieranschläge (106, 108) vorgesehen sind, entlang welchen weiteren Linearverschieberichtungen die Positionieranschläge (106, 108) ausschließlich verschiebbar sind, wobei die weiteren Koppelstangen (124, 126) derart orientiert sind, dass die Betätigungskraft parallel zu den weiteren Linearverschieberichtungen wirkend auf die Positionieranschläge (106, 108) übertragen wird.

## Claims

1. An apparatus for positioning a functional device, wherein the apparatus comprises:
a base body (102);
a carrier element (104) arranged on the base body (102) configured to receive the functional device, wherein the functional device is a sample container, a carrier plate, or a parallel grid-like store or receptacle;
positioning stops (106, 108) which are mounted displaceably for clamping the functional device;
an actuating device (114), which is arranged in such a way that by operating the actuating device (114), the positioning stops (106, 108) are transferred between an operating state in which the functional device is engaged, and an operating state in which the functional device is released;
a force transmitting member configured to transmit an actuating force from the actuating device (114) to the positioning stops (106, 108);
wherein the force transmitting member is rotatably supported on a coupling disk (118);
a pivotally mounted coupling rod (144), which by means of the actuating device (114) is coupled to the coupling disk (118);
a linear guide device (146) configured to provide a linear displacement direction of the actuating device (114), wherein the actuating device is only displaceable along the linear displacement direction (114);
wherein the coupling rod (144) is pivotally connected to the rotatably supported coupling disk (118) and is hinged to the actuating device (114) by the linear guide device (146);
wherein, when the functional device is in an operating state, the coupling rod (144) is oriented such that a functional device force of the functional device is transmitted by the functional device perpendicular to the linear displacement direction, and the actuating device (114) and the coupling disk (118) are so coupled by means of the coupling rod (144), such that the functional device engages the coupling disk (118) that transmits the functional device force of the actuating device (114) in such a way that the actuating device (114) remains in a rest position despite the action of the transferred functional device force from the carrier element (104);
wherein the transfer of the positioning stops (106, 108) between the functional device in the engaged operating state and the functional device in the released operating state is accomplished by pivoting the pivotally mounted coupling rod (144);
wherein the apparatus further comprises:
further, movably mounted, coupling rods (124, 126), by means of which the positioning stops (106, 108) are coupled to the force transmitting member, wherein the transfer of the positioning stops (106, 108) between the operating state in which the functional device is engaged, and the operating state in which the functional device is released, is accomplished, in particular, by means of pivoting the further movably mounted coupling rods (124, 126), and
further linear guide devices (110, 112) configured to prescribe further linear displacement directions of the positioning stops (106, 108), along which further linear displacement directions the positioning stops are exclusively displaceable, wherein the further coupling rods (124, 126) are oriented in the further linear displacement directions, so that the actuating force is transmitted to the positioning stops (106, 108) in parallel to the further linear displacement directions.

2. The apparatus according to claim 1, wherein the coupling rod (144) comprises a first rectilinear portion (188) and a second rectilinear portion (189), wherein the first rectilinear portion (188) and the second rectilinear portion (189) are angled away from one another.

3. The apparatus according to claim 1 or claim 2, wherein the linear displacement direction is parallel to a lateral boundary edge of the carrier element (104).

4. The apparatus according to one of claims 1 to 3, wherein the actuating device (114) is arranged on a side region of the carrier element (104) between two adjacent corner regions of the carrier element.

5. The apparatus according to one of claims 1 to 4, further comprising a shaker mounted in the base body, wherein the shaker is configured to shake the functional device mounted on the carrier element (104),
wherein the actuating device (114) and the force transmitting member are, in particular, coupled in such a way, that in the operating state in which the functional device is engaged, the force transmitting member transmits a shaking force caused by the shaker to the actuating device (114) in such a way, that the actuating device (114) remains in a rest position despite the action of the transferred shaking force against the carrier element (104),
wherein the shaking device is arranged to act on the functional device, in particular, with an orbital movement;
wherein the actuating device (114) and the force transmitting member are coupled, in particular, in such a way by means of the coupling rod (144), in that when the operating device is in an operating state in which the functional device is engaged, the coupling rod (144) transmits a shaking force perpendicular to a direction of displacement of the actuating device (114).

6. The apparatus according to one of claims 1 to 5, comprising between the carrier element (104) and the actuating device (114), in particular, directly between the carrier element (104) and the actuating device (114), a parallel tensioning element, which is set up to apply a tension, in particular, a pulling tension, to the actuating device (114), wherein the tensioning element comprises, in particular, a spring (120), in particular, a plurality of springs (120) arranged in parallel to one another;
wherein, in particular, one end of the tensioning element is arranged in a corner area of the carrier element (104);
wherein, in particular, the positioning stops (106, 108), the actuating device (114) and the force transmitting member are arranged on the carrier element (104) and are movable together relative to the base body;
wherein, in particular, an eccentrically mounted shaft is arranged on the base body (102), which engages the force transmitting member in a recess of the carrier element (104) and is drivable for exerting an orbital shaking movement of the base body (102);
wherein at least one recess with a magnetic element provided therein is formed, in particular, on the base body (102), wherein at least one bolt (184) of the carrier element (104) with a magnetic element provided thereon can be accommodated in the at least one recess;
wherein the base body (102) can be fastened to the carrier element (104) by means of an attractive force between the at least one magnetic element of the carrier element (104) and the at least one magnetic element of the base body (102);
wherein the at least one bolt (184) comprises, in particular, a resonance damping element, in particular, an elastic ring, which presses against the base body (102) in an associated recess in the event of a resonant shaking movement in order to bring the apparatus out of resonance;
wherein on the base body (102), in particular, a plurality of ball seats (706) with balls (708) arranged therein is formed, on which balls (708) the carrier element (104) rests, wherein on the base body (102), in particular, a movable machine element is arranged, wherein by means of machine-controlled motion, in particular, a pivoting motion, of the movable machine element, the actuating device (114) is actuated and, in particular, linearly displaced;
wherein, in particular, the positioning stops (106, 108) are arranged, in particular, exclusively on two opposite corner regions of the carrier element (104), wherein the positioning stops (106, 108) are formed, in particular, by means of two stop elements with mutually perpendicular stop lines for application to a rectangular functional device;
wherein the positioning stops (106, 108) are formed, in particular, by means of two stop elements with a round cross-section for application to the functional device;
wherein the stop elements are, in particular, provided as circular cylindrical pins, as conical pins, as pins with a circular cylindrical portion and a conical portion, are formed as pins with a plurality of rings of different outer diameter attached thereto, or as pins with a plurality of steps of different outer diameters integrally formed thereon;
wherein the apparatus, in particular, comprises an electrically controllable pipetting device which is configured to pipette a fluid into cavities of the functional device.

7. The apparatus according to claim 1, wherein the coupling rod (144) and the further coupling rods (124, 126) are arranged in a coplanar manner.

8. The apparatus according to one of claims 6 or 7, wherein the tensioning element and / or the force transmitting member and / or the actuating device (114) are mounted in a coplanar manner.

9. The apparatus according to one of claims 1 to 8, having a movable, in particular, a pivotable, further mounted coupling rod (1202), by means of which the actuating device (114) is coupled to the force transmitting member, wherein the coupling rod (1202) has a length adjustment mechanism for adjusting a length of the coupling rod (1202).

10. The apparatus according to one of claims 1 to 9, comprising:
a movable, in particular, pivotable, mounted coupling rod (1202), by means of which the actuating device (114) is coupled to the force transmitting member, and wherein the mounted coupling rod includes a movable first magnet (1208);
a second magnet mounted on the carrier element (104) or on the base body (102) and acting in concert with the first magnet (1208) to provide an attraction force;
wherein the first magnet (1208) and the second magnet (1210) are arranged such that in the operating state in which the functional device is engaged, a distance between the first magnet (1208) and the second magnet (1210) is smaller than in the operating state in which the functional device is released.
wherein, in particular, the first magnet (1208) and the second magnet (1210) apply the attraction force in a direction parallel to a direction of displacement of the actuator (114) in the operating state in which the functional device is engaged;
wherein, in particular, the first magnet (1208) and the second magnet (1210) exert the attraction force in a direction perpendicular to an extension direction of the coupling rod (1202) in the operating state in which the functional device is engaged.

11. A method for positioning a functional device, comprising:
arranging the functional device between slidably mounted positioning stops (106, 108) displaceably mounted on a carrier element (104) in an operating state in which the functional device is releaseable to receive the functional device on the carrier element (104), which is arranged on a base body (102), wherein the functional device is a sample container, a sample container, a carrier plate, or a parallel grid-like store or receptacle;
clamping the functional device between the positioning stops (106, 108) by actuating an actuating device (114) for transferring the positioning stops (106, 108) from the operating state in which the functional device is releaseable to an operating state in which the functional device is engaged;
transmitting an actuating force from the actuating device (114) to the positioning stops (106, 108) by means of a force transmitting member, wherein the force transmitting member is as a rotatably mounted coupling disc (118);
wherein a linear guide device (146) for presetting a linear displacement direction of the actuating device (114) is provided, along which linear displacement direction, the actuating device (114) is exclusively displaceable, and wherein a coupling rod (144) hinged to the rotatably mounted coupling disc (118) and with the actuating device (114) is pivotally connected by means of the linear guide device, and
transferring a functional force of the functional device from the coupling disc (118) to the actuating device (114) in the operating state in which the functional device is engaged by means of the coupling rod (144), such that the actuating device (114) remains in a rest position despite the action of the transmitted functional device force against the carrier element (104);
wherein, in the operating state in which the functional device is engaged, the coupling rod (144) is oriented such that the functional device force is transmitted to the actuator (114) acting perpendicular to the linear shift direction;
wherein the transfer of the positioning stops (106, 108) between the operating state in which the functional device is engaged and the operating state in which the functional device is releasable is accomplished by means of pivoting the coupling rod (144);
wherein movably mounted further coupling rods (124, 126) are provided, by means of which the positioning stops (106, 108) are coupled to the force transmitting member, and the transfer of the positioning stops (106, 108) between the operating state in which the functional device is engaged and the operating state in which the functional device is releasable is accomplished by means of moving, in particular, by means of pivoting, the further coupling rods (124, 126); and
wherein further linear guide devices (110, 112) are provided for prescribing further linear displacement directions of the positioning stops (106, 108), along which further linear displacement directions the positioning stops (106, 108) are exclusively displaceable, the further coupling rods (124, 126) being oriented so that the actuating force is transmitted to the positioning stops (106, 108) in parallel to the further linear displacement directions.

## Revendications

1. Dispositif pour le positionnement d'un équipement fonctionnel, sachant que le dispositif présente :
un corps de base (102) ;
un élément support (104) apte à être disposé sur le corps de base (102) pour recevoir l'équipement fonctionnel ; sachant que l'équipement fonctionnel est un récipient d'échantillons, une plaque support ou un récipient de stockage ou de réception disposé en trame ;
des butées de positionnement (106, 108) qui sont logées de façon coulissable pour enserrer l'équipement fonctionnel ;
un organe d'actionnement (114) qui est configuré de telle façon que, moyennant l'actionnement de l'organe d'actionnement (114), les butées de positionnement (106, 108) puissent être transférées entre un état de fonctionnement mettant en prise l'équipement fonctionnel et un état de fonctionnement libérant l'équipement fonctionnel ;
un élément de transmission de force qui est configuré pour transmettre une force d'actionnement de l'organe d'actionnement (114) aux butées de positionnement (106, 108) ;
sachant que l'élément de transmission de force est constitué comme disque d'accouplement (118) logé de façon rotative,
une tige de couplage (144) logée de façon pivotable, moyennant laquelle l'organe d'actionnement (114) est couplé au disque d'accouplement (118),
un organe de guidage linéaire (146) pour spécifier une direction de coulissement linéaire de l'organe d'actionnement (114), direction de coulissement linéaire le long de laquelle l'organe d'actionnement (114) est exclusivement coulissable,
sachant que la tige de couplage (144) est reliée de façon articulée au disque d'accouplement (118) logé de façon rotative et relié de façon articulée à l'organe d'actionnement (114) moyennant l'organe de guidage linéaire,
sachant que, dans l'état de fonctionnement mettant en prise l'équipement fonctionnel, la tige de couplage (144) est orientée de telle façon qu'une force d'équipement fonctionnel de l'équipement fonctionnel soit transmise à l'organe d'actionnement (114) en agissant perpendiculairement à la direction de coulissement linéaire et l'organe d'actionnement (114) et le disque d'accouplement (118) sont couplés moyennant la tige de couplage (144) de telle façon que, dans l'état de fonctionnement mettant en prise l'équipement fonctionnel, le disque d'accouplement (118) transmette la force d'équipement fonctionnel de l'équipement fonctionnel à l'organe d'actionnement (114) de telle façon que l'organe d'actionnement demeure dans une position de repos par rapport à l'élément support (104) malgré l'action de la force d'équipement fonctionnel transmise,
sachant que le transfert des butées de positionnement (106, 108) entre l'état de fonctionnement mettant en prise l'équipement fonctionnel et l'état de fonctionnement libérant l'équipement fonctionnel est réalisé moyennant le pivotement de la tige de couplage (144) logée de façon pivotable,
sachant que le dispositif présente en outre :
des tiges de couplage supplémentaires (124, 126) logées de façon mobile moyennant lesquelles les butées de positionnement (106, 108) sont couplées à l'élément de transmission de force, sachant que le transfert des butées de positionnement (106, 108) entre l'état de fonctionnement mettant en prise l'équipement fonctionnel et l'état de fonctionnement libérant l'équipement fonctionnel est réalisé moyennant le déplacement, en particulier moyennant le pivotement, des tiges de couplage supplémentaires (124, 126) ; et
des organes de guidage linéaire supplémentaires (110, 112) pour spécifier des directions de coulissement linéaire supplémentaires des butées de positionnement (106, 108), directions de coulissement linéaire supplémentaires le long desquelles les butées de positionnement (106, 108) sont exclusivement coulissables, sachant que les tiges de couplage supplémentaires (124, 126) sont orientées de telle façon que la force d'actionnement soit transmise aux butées de positionnement (106, 108) en agissant parallèlement aux directions de coulissement linéaire supplémentaires.

2. Dispositif selon la revendication 1, sachant que la tige de couplage (144) présente une première section (188) au tracé rectiligne et une deuxième section (189) au tracé rectiligne, sachant que la première section (188) au tracé rectiligne et la deuxième section (189) au tracé rectiligne sont coudées l'une par rapport à l'autre.

3. Dispositif selon l'une des revendications 1 à 2, sachant que la direction de coulissement linéaire est parallèle à un bord de délimitation latéral de l'élément support (104).

4. Dispositif selon l'une des revendications 1 à 3, sachant que l'organe d'actionnement (114) est disposé au niveau d'une zone latérale de l'élément support (104) entre deux zones d'angle adjacentes de l'élément support (104).

5. Dispositif selon l'une des revendications 1 à 4, présentant en outre un organe d'agitation apposé dans le corps de base et qui est configuré pour agiter l'équipement fonctionnel monté sur l'élément support (104),
sachant que l'organe d'actionnement (114) et l'élément de transmission de force sont couplés en particulier de telle façon que, dans l'état de fonctionnement mettant en prise l'équipement fonctionnel, l'élément de transmission de force transmette une force d'agitation engendrée par l'organe d'agitation à l'organe d'actionnement (114) de telle façon que l'organe d'actionnement (114) demeure dans une position de repos par rapport à l'élément support (104) malgré l'action de la force d'agitation transmise,
sachant que l'organe d'agitation pour la sollicitation de l'équipement fonctionnel est configuré en particulier avec un mouvement orbital,
sachant que l'organe d'actionnement (114) et l'élément de transmission de force sont couplés moyennant la tige de couplage (144) en particulier de telle façon que, dans l'état de fonctionnement mettant en prise l'équipement fonctionnel, la tige de couplage (144) transmette une force d'agitation perpendiculairement à une direction de coulissement de l'organe d'actionnement (114).

6. Dispositif selon l'une des revendications 1 à 5, présentant un organe de tension disposé entre l'élément support (104) et l'organe d'actionnement (114), en particulier directement entre l'élément support (104) et l'organe d'actionnement (114), et qui est configuré pour transmettre un effort, en particulier un effort de traction, à l'organe d'actionnement (114),
sachant que l'organe de tension présente en particulier un ressort (120), en particulier une pluralité de ressorts (120) disposés parallèlement les uns aux autres,
sachant qu'en particulier une extrémité de l'organe de tension est disposée dans une zone d'angle de l'élément support (104),
sachant qu'en particulier les butées de positionnement (106, 108), l'organe d'actionnement (114) et l'élément de transmission de force sont disposés au niveau de l'élément support (104) et sont mobiles conjointement par rapport au support de base,
sachant qu'un arbre monté de façon excentrique qui prend dans un renfoncement dans l'élément de transmission de force de l'élément support (104) et est entraînable pour exercer un mouvement d'agitation orbital du corps de base (102) est disposé en particulier au niveau du corps de base (102),
sachant qu'au moins un renfoncement avec un élément magnétique prévu dans celui-ci est formé en particulier au niveau du corps de base (102), sachant qu'au moins un boulon (184) de l'élément support (104) avec un élément magnétique prévu sur celui-ci peut être reçu dans l'au moins un renfoncement, sachant que le corps de base (102) peut être fixé à l'élément support (104) moyennant une force d'attraction entre l'au moins un élément magnétique de l'élément support (104) et l'au moins un élément magnétique du corps de base (102),
sachant que l'au moins un boulon (184) présente en particulier un élément d'amortissement de résonance, en particulier une bague élastique, qui appuie contre le corps de base (102) en cas de mouvement d'agitation résonant dans le renfoncement afférent pour mettre le dispositif hors résonance,
sachant qu'en particulier une pluralité de logements de billes (706) avec des billes (708) disposées dans ceux-ci, billes (708) sur lesquelles l'élément support (104) repose, est formée sur le corps de base (102), sachant qu'en particulier un élément de machine mobile est disposé au niveau du corps de base (102), sachant que l'organe d'actionnement (114) peut être actionné, en particulier coulissé de façon linéaire, moyennant le mouvement, en particulier le pivotement, commandé par machine de l'élément de machine mobile,
sachant qu'en particulier les butées de positionnement (106, 108) sont disposées en particulier exclusivement au niveau de deux zones d'angle opposées de l'élément support (104),
sachant que les butées de positionnement (106, 108) sont formées pour être appliquées sur un équipement fonctionnel rectangulaire en particulier moyennant deux éléments de butée à lignes de butée perpendiculaires l'une par rapport à l'autre,
sachant que les butées de positionnement (106, 108) sont formées pour être appliquées sur l'équipement fonctionnel en particulier moyennant deux éléments de butée à section transversale ronde,
sachant que les éléments de butée sont formés en particulier comme pions cylindriques circulaires, comme pions coniques, comme pions présentant une section cylindrique circulaire et une section conique, comme pions présentant une pluralité de bagues de diamètre extérieur différent apposées sur ceux-ci, ou comme pions présentant une pluralité de paliers de diamètre extérieur différent formés comme parties intégrantes sur ceux-ci,
sachant que le dispositif présente en particulier un organe de pipetage apte à être commandé électriquement et qui est configuré pour le pipetage d'un fluide dans des cavités de l'équipement fonctionnel.

7. Dispositif selon la revendication 1, sachant que la tige de couplage (144) et les tiges de couplage supplémentaires (124, 126) sont disposées de façon coplanaire.

8. Dispositif selon la revendication 6 ou 7, sachant que l'organe de tension et/ou l'élément de transmission de force et/ou l'organe d'actionnement (114) sont montés de façon coplanaire.

9. Dispositif selon l'une des revendications 1 à 8, présentant une tige de couplage (1202) logée de façon mobile, en particulier pivotable, moyennant laquelle l'organe d'actionnement (114) est couplé à l'élément de transmission de force, sachant que la tige de couplage (1202) présente un mécanisme de réglage de longueur pour régler une longueur de la tige de couplage (1202).

10. Dispositif selon l'une des revendications 1 à 9, présentant :
une tige de couplage (1202) logée de façon mobile, en particulier pivotable, moyennant laquelle l'organe d'actionnement (114) est couplé à l'élément de transmission de force, et qui contient un premier aimant (1208) qui est mobile conjointement à celui-ci ;
un deuxième aimant (1210) qui est apposé sur l'élément support (104) ou sur le corps de base (102) et engendre une force d'attraction conjointement avec le premier aimant (1208) ;
sachant que le premier aimant (1208) et le deuxième aimant (1210) sont disposés de telle façon que, dans l'état de fonctionnement mettant en prise l'équipement fonctionnel, un écart entre le premier aimant (1208) et le deuxième aimant (1210) soit plus petit que dans l'état de fonctionnement libérant l'équipement fonctionnel,
sachant qu'en particulier le premier aimant (1208) et le deuxième aimant (1210), dans l'état de fonctionnement mettant en prise l'équipement fonctionnel, exercent la force d'attraction dans une direction parallèle à une direction de coulissement de l'organe d'actionnement (114),
sachant qu'en particulier le premier aimant (1208) et le deuxième aimant (1210), dans l'état de fonctionnement mettant en prise l'équipement fonctionnel, exercent la force d'attraction dans une direction perpendiculaire à une direction d'extension de la tige de couplage (1202).

11. Procédé pour le positionnement d'un équipement fonctionnel, le procédé présentant:
la disposition de l'équipement fonctionnel entre des butées de positionnement (106, 108) logées de façon coulissable au niveau d'un élément support (104) dans un état de fonctionnement libérant l'équipement fonctionnel pour recevoir l'équipement fonctionnel sur l'élément support (104) qui est disposé sur un corps de base (102) ; sachant que l'équipement fonctionnel est un récipient d'échantillons, une plaque support ou un récipient de stockage ou de réception disposé en trame ;
le serrage de l'équipement fonctionnel entre les butées de positionnement (106, 108) moyennant l'actionnement d'un organe d'actionnement (114) pour transférer les butées de positionnement (106, 108) de l'état de fonctionnement libérant l'équipement fonctionnel à un état de fonctionnement mettant en prise l'équipement fonctionnel ;
la transmission d'une force d'actionnement de l'organe d'actionnement (114) aux butées de positionnement (106, 108) moyennant un élément de transmission de force, sachant que l'élément de transmission de force est constitué comme disque d'accouplement (118) logé de façon rotative ;
sachant qu'un organe de guidage linéaire (146) est mis à disposition pour spécifier une direction de coulissement linéaire de l'organe d'actionnement (114), direction de coulissement linéaire le long de laquelle l'organe d'actionnement (114) est exclusivement coulissable, et sachant qu'une tige de couplage (144) est reliée de façon articulée au disque d'accouplement (118) logé de façon rotative et relié de façon articulée à l'organe d'actionnement (114) moyennant le guidage linéaire, et
la transmission d'une force d'équipement fonctionnel de l'équipement fonctionnel du disque d'accouplement (118) à l'organe d'actionnement (114) dans l'état de fonctionnement mettant en prise l'équipement fonctionnel moyennant la tige de couplage (144) de telle façon que l'organe d'actionnement (114) demeure dans une position de repos par rapport à l'élément support (104) malgré l'action de la force d'équipement fonctionnel transmise,
sachant que, dans l'état de fonctionnement mettant en prise l'équipement fonctionnel, la tige de couplage (144) est orientée de telle façon que la force d'équipement fonctionnel soit transmise à l'organe d'actionnement (114) en agissant perpendiculairement à la direction de coulissement linéaire,
sachant que le transfert des butées de positionnement (106, 108) entre l'état de fonctionnement mettant en prise l'équipement fonctionnel et l'état de fonctionnement libérant l'équipement fonctionnel est réalisé moyennant le pivotement de la tige de couplage (144),
sachant que des tiges de couplage supplémentaires (124, 126) logées de façon mobile moyennant lesquelles les butées de positionnement (106, 108) sont couplées à l'élément de transmission de force sont prévues, sachant que le transfert des butées de positionnement (106, 108) entre l'état de fonctionnement mettant en prise l'équipement fonctionnel et l'état de fonctionnement libérant l'équipement fonctionnel est réalisé moyennant le déplacement, en particulier moyennant le pivotement, des tiges de couplage supplémentaires (124, 126) ; et
sachant que des organes de guidage linéaire supplémentaires (110, 112) sont prévues pour spécifier des directions de coulissement linéaire supplémentaires des butées de positionnement (106, 108), directions de coulissement linéaire supplémentaires le long desquelles les butées de positionnement (106, 108) sont exclusivement coulissables, sachant que les tiges de couplage supplémentaires (124, 126) sont orientées de telle façon que la force d'actionnement soit transmise aux butées de positionnement (106, 108) en agissant parallèlement aux directions de coulissement linéaire supplémentaires.
